# NEUE EUROPÄISCHE PATENTSCHRIFT

(11) **EP 2 181 593 B2**
(45) Veröffentlichungstag und Bekanntmachung des Hinweises auf die Entscheidung über den Einspruch: **23.02.2022**
(45) Hinweis auf die Patenterteilung: 24.08.2016
(21) Anmeldenummer: 09181019.2
(22) Anmeldetag: 24.04.2003
(51) Int. Cl.: A01N 25/30, A01N 31/02, A01P 13/02

(54) **Verwendung bestimmter Alkoholalkoxylate als Adjuvans für den agrotechnischen Bereich**
Use of specific alcohol alkoxylates as adjuvant for the agrotechnical sector
Utilisation d'alkoxylates d'alcool définis comme adjuvants pour le domaine agrotechnique

(30) Priorität: 24.04.2002 DE 10218316
(43) Veröffentlichungstag der Anmeldung: 05.05.2010
(62) Teilanmeldung aus: 03747121.6
(73) Patentinhaber: BASF SE, 67056 Ludwigshafen am Rhein (DE)
(72) Erfinder: Berghaus, Rainer, 67346 Speyer (DE); Schmidt, Oskar, 67105 Schifferstadt (DE); Köhle, Harald, 67273 Bobenheim (DE); Stierl, Reinhard, 67251 Freinsheim (DE); Wagner, Norbert, 67112 Mutterstadt (DE); Klingelhöfer, Paul, 68165 Mannheim (DE)

(56) Entgegenhaltungen:
- EP-A- 0 473 003
- WO-A-01/30147
- WO-A-01/77276
- WO-A-95/18531
- WO-A-96/31121
- WO-A-97/00010
- WO-A-99/03345
- US-A- 5 661 121
- US-A- 6 057 284
- US-A- 6 124 301
- DE JONGHE ET AL: "Efficacy of alcohol alkoxylate surfactants differing in the molecular structure of the hydrophilic portion to control Phytophthora nicotianae in tomato substrate culture", CROP PROTECTION, ELSEVIER SCIENCE, GB, vol. 26, no. 10, 14 September 2007 (2007-09-14), pages 1524-1531, XP022242930, ISSN: 0261-2194, DOI: 10.1016/J.CROPRO.2007.01.001

## Beschreibung

Die vorliegende Erfindung betrifft die Verwendung bestimmter Alkoholalkoxylate vom amphiphilen Typ als wirkungsverbesserndes Adjuvans im agrotechnischen Bereich und insbesondere im Bereich des Pflanzenschutzes. Entsprechende agrotechnische Mittel werden ebenfalls beschrieben.

Neben der Optimierung der Wirkstoffeigenschaften kommt mit Blick auf eine industrielle Produktion und Anwendung von Wirkstoffen der Entwicklung eines effizienten Mittels besondere Bedeutung zu. Durch eine sachgerechte Formulierung des oder der Wirkstoffe muß ein optimaler Ausgleich zwischen teils gegenläufigen Eigenschaften wie der biologischen Wirksamkeit, der Toxikologie, möglichen Einflüssen auf die Umwelt und den Kosten gefunden werden. Darüber hinaus bestimmt die Formulierung zu einem erheblichen Maß die Haltbarkeit und den Anwendungskomfort eines Mittels.

Von besonderer Bedeutung für die Wirksamkeit eines agrotechnischen Mittels ist die effektive Aufnahme des Wirkstoffs durch die Pflanze. Erfolgt diese Aufnahme über das Blatt, so stellt sich diese als komplexer Transportvorgang dar, bei dem die Wirkstoffmasse, beispielsweise ein Herbizid, zunächst in die wachsartige Cuticula des Blatts eindringen und anschließend über die Cuticula in die unterliegenden Gewebe an den eigentlichen Wirkort diffundieren muss.

Allgemein bekannt und landwirtschaftliche Praxis ist es, zwecks verbesserter Wirksamkeit Formulierungen bestimmte Hilfsstoffe zuzusetzen. Vorteilhafterweise können dadurch die Wirkstoffmengen in der Formulierung bei gleichbleibender Aktivität verringert werden, wodurch Kosten minimiert und gegebenenfalls bestehende gesetzliche Regelungen eingehalten werden können. Auch gelingt es in Einzelfällen, das Wirkstoffspektrum zu vergrößern, indem Pflanzen, die ohne Zusatz nur in unzureichender Weise mit einem bestimmten Wirkstoff behandelt werden konnten, durch Zusatz bestimmter Hilfsstoffe einer entsprechenden Behandlung zugänglich sind. Weiterhin kann die Leistungsfähigkeit unter ungünstigen Umweltbedingungen in Einzelfällen durch eine geeignete Formulierung erhöht werden. Mithin können auch Unverträglichkeiten verschiedener Wirkstoffe in einer Formulierung vermieden werden.

Derartige Hilfsstoffe werden gelegentlich auch als Adjuvantien bezeichnet. Es handelt sich oftmals um oberflächenaktive oder salzartige Verbindungen. Je nach Wirkungsweise können z.B. Modifikatoren, Aktuatoren, Dünger und pH-Puffer unterschieden werden. Modifikatoren beeinflussen Benetzung, Haftung und Spreitung einer Formulierung. Aktuatoren brechen die wachsartige Pflanzencuticula auf und verbessern die Penetration des Wirkstoffs in die Cuticula sowohl kurzfristig (im Minutenbereich) als auch langfristig (im Stundenbereich). Dünger wie Ammoniumsulfat, Ammoniumnitrat oder Harnstoff verbessern die Absorption und Löslichkeit des Wirkstoffs, und sie können antagonistische Verhaltensweisen von Wirkstoffen verringern. pH-Puffer werden herkömmlicherweise zur optimalen Einstellung des pH-Werts der Formulierung verwendet.

Im Hinblick auf die Aufnahme des Wirkstoffs in das Blatt können oberflächenaktive Substanzen als Modifikatoren und Aktuatoren wirken. Allgemein wird angenommen, dass geeignete oberflächenaktive Substanzen die effektive Kontaktfläche von Flüssigkeiten auf Blättern durch eine Verminderung der Oberflächenspannung erhöhen können. Darüber hinaus können bestimmte oberflächenaktive Substanzen die epicuticulären Wachse auflösen oder aufbrechen, was die Absorption des Wirkstoffs erleichtert. Ferner können einige oberflächenaktive Substanzen auch die Löslichkeit von Wirkstoffen in Formulierungen verbessern und damit eine Kristallbildung vermeiden oder diese zumindest hinauszögern. Schließlich können sie in bestimmten Fällen auch die Absorption von Wirkstoffen beeinflussen, indem sie Feuchtigkeit zurückhalten.

Adjuvantien vom oberflächenaktiven Typ werden in vielfältiger Weise für agrotechnische Anwendungen genutzt. Man kann diese in anionische, kationische, nicht-ionische oder amphotere Stoffgruppen unterteilen.

Traditionell werden Öle auf Petroleum-Basis als aktivierende Adjuvantien verwendet. In jüngster Vergangenheit setzte man auch Samenextrakte, natürliche Öle und deren Derivate, beispielsweise aus Sojabohnen, Sonnenblumen und Kokosnuss, ein.

Bei synthetischen oberflächenaktiven Substanzen, die üblicherweise als Aktuatoren verwendet werden, handelt es sich unter anderem um Polyoxyethylen-Kondensate mit Alkoholen, Alkylphenolen oder Alkylaminen, welche HLB-Werte im Bereich von 8 bis 13 aufweisen. In diesem Sinne nennt die WO 00/42847 beispielsweise den Einsatz bestimmter linearer Alkoholalkoxylate, um die Wirksamkeit agrotechnischer Biozidformulierungen zu steigern. In der EP-A 0 356 812 sind Adjuvantien beschrieben, die neben einem anionischen Tensid auch ein nichtionisches Tensid enthalten sollen. Als nichtionische Tenside werden polyalkoxylierte C₆-C₂₂-Alkylether in Betracht gezogen.

Das Spektrum von Alkoholalkoxylaten ist jedoch vielfältig. Als Tenside finden sie vornehmlich Anwendung in Wasch- und Reinigungsmitteln, in der metallverarbeitenden Industrie, bei der Herstellung und Verarbeitung von Textilien, in der Leder-, Papier-, Druck-, Galvano- und Fotoindustrie, bei der Wasserbehandlung, in pharmazeutischen, tierarzneilichen und den Pflanzenschutz betref-fenden Formulierungen, oder in der Kunststoff herstellenden und Kunststoff verarbeitenden Industrie. Insbesondere die Strukturen des Alkoholteils und in bestimmten Fällen auch des Alkoxylatteils nehmen Einfluss auf die Eigenschaften der Alkoxylate, so dass bei den vorstehend genannten Anwendungen verschiedene technische Effekte zum Tragen kommen können. Hierzu gehören das Benetzen, das Spreiten, die Penetration, das Anhaften, die Filmbildung, das Verbessern von Verträglichkeiten, die Driftkontrolle und das Entschäumen.

So werden beispielsweise in der WO 01/77276, der US-A 6,057,284 und der US-A 5,661,121 bestimmte Alkoholalkoxylate als schaumdämpfende Tenside beschrieben. Bei diesen Tensiden handelt es sich um blockförmige Alkoxylate, deren Alkoholteil verzweigt ist.

Der vorliegenden Erfindung liegt die Aufgabe zugrunde, weitere Anwendungen derartiger Alkoxylate auf Basis verzweigter Alkohole zur Verfügung zu stellen.

Diese Aufgabe löst die vorliegende Erfindung durch die Verwendung der Alkoxylate als Adjuvans und die Bereitstellung agrotechnischer Mittel, die diese Alkoxylate enthalten.

Die WO 97/00010 beschreibt den Zusatz von ethoxylierten Alkoholen zu herbiziden Mitteln, die Glyphosat oder ein Salz davon enthalten.

Die WO 99/03345 beschreibt Ethylenoxid/Propylenoxid/Ethylenoxid-Blockalkoxylate als Zusatz zu Pflanzenschutzmitteln.

Die WO 01/30147 beschreibt Zusammensetzungen zur Anwendung als Pestizide und/oder wachstumssteuernde Mittel. Die Zusammensetzungen enthalten zwei unterschiedliche, nichtionische oberflächenaktive Agenzien mit jeweils einem hydrophoben Teil, der unter anderem auf einem C13-Oxoalkohol beruhen kann. Bei den Agenzien handelt es sich um Ethoxylate und/oder Propoxylate.

Die US-A 6,124,301 beschreibt die Verwendung von linearen bzw. verzweigten alkoxylierten Fettalkoholen mit 9 bis 24 Kohlenstoffatomen im Alkoholteil in fungiziden Zusammensetzungen.

Die WO 96/31121 beschreibt herbizide Zusammensetzungen, welche Isotridecylethoxylate enthalten können.

Gegenstand der vorliegenden Erfindung ist die Verwendung wenigstens eines alkoxylierten C10-Oxoatkohols der Formel (I)

R-O- (CmH2mO)ₓ- (CnH2nO)_{y}-H (I)

worin
- R: für Isodecyl steht;
- m, n: unabhängig voneinander für einen Wert von 2 bis 16 stehen;
x+y einem Wert von 1 bis 100 entsprechen,
und wobei:
m = 2 ist, n = 3 ist, der Wert von x größer als null ist, und der Wert von y größer als null ist; oder
m = 3 ist, n = 2 ist, der Wert von x größer als null ist, und der Wert von y größer als null ist; oder
m = 2 ist, n = 5 ist, der Wert von x größer als null ist, und der Wert von y größer als null ist; oder
m = 5 ist, n = 2 ist, der Wert von x größer als null ist, und der Wert von y größer als null ist,
als Adjuvans bei der Behandlung von Pflanzen.

Die erfindungsgemäß zu verwendenden Alkoxylate weisen adjuvante, insbesondere wirkungsfördernde Eigenschaften auf. So ermöglicht der Zusatz derartiger Alkoxylate eine beschleunigte Aufnahme von Wirkstoffen durch eine mit dem Wirkstoff zu behandelnde Pflanze. Aus der adjuvanten Wirkung leiten sich insbesondere folgende Aspekte bei der Behandlung von Pflanzen mit einem oder mehreren Wirkstoffen ab:
- vergleichsweise höhere Wirksamkeit des Wirkstoffs bei gegebener Aufwandmenge;
- vergleichsweise geringere Aufwandmenge bei gegebener Wirkung;
- vergleichsweise stärkere Aufnahme des Wirkstoffs durch die Pflanze, insbesondere über das Blatt, und damit Vorteile im Nachlaufverfahren, insbesondere bei der Sprühbehandlung von Pflanzen.

Die erfindungsgemäße Verwendung ist insbesondere auf den Pflanzenanbau, die Landwirtschaft und den Gartenbau gerichtet. Insbesondere dient sie zur Kontrolle unerwünschten Pflanzenwachstums.

Demnach betrifft die vorliegende Erfindung auch obigen Verwendungszwecken entsprechende Verfahren zur Behandlung von Pflanzen, wobei man eine geeignete Menge an erfindungsgemäßem Alkoxylat appliziert.

Besondere Vorteile werden insbesondere im Anbau von Allium cepa, Ananas comosus, Arachis hypogaea, Asparagus officinalis, Beta vulgaris spec. altissima, Beta vulgaris spec. rapa, Brassica napus var. napus, Brassica napus var. napobrassica, Brassica rapa var. silvestris, Camellia sinensis, Carthamus tinctorius, Carya illinoinensis, Citrus limon, Citrus sinensis, Coffea arabica (Coffea canephora, Coffea liberica), Cucumis sativus, Cynodon dactylon, Daucus carota, Elaeis guineensis, Fragaria vesca, Glycine max, Gossypium hirsutum, (Gossypium arboreum, Gossypium herbaceum, Gossypium vitifolium), Helianthus annuus, Hevea brasiliensis, Hordeum vulgare, Humulus lupulus, Ipomoea batatas, Juglans regia, Lens culinaris, Linum usitatissimum, Lycopersicon lycopersicum, Malus spec., Manihot esculenta, Medicago sativa, Musa spec., Nicotiana tabacum (N.rustica), Olea europaea, Oryza sativa, Phaseolus lunatus, Phaseolus vulgaris, Picea abies, Pinus spec., Pisum sativum, Prunus avium, Prunus persica, Pyrus communis, Ribes sylvestre, Ricinus communis, Saccharum officinarum, Secale cereale, Solanum tuberosum, Sorghum bicolor (s. vulgare), Theobroma cacao, Trifolium pratense, Triticum aestivum, Triticum durum, Vicia faba, Vitis vinifera, Zea mays erzielt.

Darüber hinaus können die erfindungsgemäß zu verwendenden Alkoxylate auch in Kulturen, die gegen die Wirkung von Herbiziden tolerant sind, verwendet werden. Derartige Kulturen können beispielsweise durch Züchtung und auch gentechnische Methoden erhalten werden.

Zumindest ein Teil der zu verwendenden Alkoxylate ist an sich bekannt. Beispielsweise beschreiben die WO 01/77276 sowie die US 6,057,284 bzw. EP 0 906 150 geeignete Alkoxylate.

Der Alkoholteil der erfindungsgemäß zu verwendenden Alkoholalkoxylate basiert auf an sich bekannten Alkoholen oder Alkoholgemischen mit 10 Kohlenstoffatomen.

Der Alkoholteil der zu verwendenden Alkoxylate ist verzweigt. In diesem Sinne weist die Hauptkette des Alkoholteils in der Regel 1 bis 4 Verzweigungen auf, wobei auch Alkohole mit höherem oder niedrigerem Verzweigungsgrad im Gemisch mit weiteren Alkoholalkoxylaten verwendet werden können, solange die mittlere Zahl der Verzweigungen des Gemisches im angegebenen Bereich liegt.

Im Allgemeinen weisen die Verzweigungen unabhängig voneinander 1 bis 6 und insbesondere 1 bis 4 Kohlenstoffatome auf. Besondere Verzweigungen sind Methyl-, Ethyl-, n-Propyl- oder iso-Propyl-Gruppen.

Gemäß einer Ausführungsform weisen die den Alkoxylaten zugrunde liegenden Alkoholteile daher im Mittel wenigstens zwei endständige Methylgruppen auf.

Geeignete Alkohole sind auf synthetischem Weg, z. B. durch Aufbau aus Edukten mit einer geringeren Zahl an Kohlenstoffatomen erhältlich. So erhält man z. B. nach dem SHOP-Prozess (Shell Higher Olefine Process) ausgehend von Ethen Olefinfraktionen mit einer für die Weiterverarbeitung zu Tensiden geeigneten Kohlenstoffanzahl. Die Funktionalisierung der Olefine zu den entsprechenden Alkoholen erfolgt dabei z. B. durch Hydroformylierung und Hydrierung.

Olefine mit einer zur Weiterverarbeitung zu geeigneten Alkoholen geeigneten Kohlenstoffzahl können auch durch Oligomerisation von C₃-C₆-Alkenen, wie insbesondere Propen oder Buten oder Gemischen davon, erhalten werden.

Weiterhin können niedere Olefine mittels heterogener saurer Katalysatoren, z. B. geträgerter Phosphorsäure, oligomerisiert und anschließend zu Alkoholen funktionalisiert werden.

Eine allgemeine Synthesemöglichkeit zur Herstellung verzweigter Alkohole ist z.B. die Umsetzung von Aldehyden oder Ketonen mit Grignard-Reagenzien (Grignard-Synthese). Anstelle von Grignard-Reagenzien können auch Aryl- oder Alkyl-Lithiumverbindungen eingesetzt werden, die sich durch ein höheres Reaktionsvermögen auszeichnen. Des weiteren können die verzweigten Alkohole durch Aldolkondensation erhalten werden, wobei die Reaktionsbedingungen dem Fachmann bekannt sind.

Die Alkoxylierung ergibt sich aus der Umsetzung mit geeigneten Alkylenoxiden.

Der Typ zu verwendender Alkoholalkoxylate basiert auf zwei verschiedenen Alkylenoxid-Arten. Dabei sind mehrere Alkylenoxid-Einheiten einer Art als Block anzuordnen, so dass sich zwei unterschiedliche Alkylen-oxid-Blöcke ergeben, die jeweils aus mehreren Einheiten gleicher Alkylenoxide gebildet werden.

Erfindungsgemäß zu verwendende Alkoholalkoxylate weisen wenigstens einen Ethylenoxid-Block auf. Es werden Ethylenoxid-Blöcke mit Propylenoxid- oder Pentylenoxid-Blöcken kombiniert.

In Abhängigkeit von den für die Umsetzung gewählten Einsatzmengen an Alkylenoxid(en) sowie den Reaktionsbedingungen ergibt sich der jeweilige Alkoxylierungsgrad. Hierbei handelt es sich in der Regel um einen statistischen Mittelwert, da die Anzahl von Alkylenoxid-Einheiten der aus der Umsetzung resultierenden Alkoholalkoxylate variiert.

Der Alkoxylierungsgrad, d.h. die mittlere Kettenlänge der Polyetherketten erfindungsgemäß zu verwendender Alkoholalkoxylate kann durch das Molmengenverhältnis von Alkohol zu Alkylenoxid bestimmmt werden. Bevorzugt sind Alkoholalkoxylate mit etwa 2 bis 15, insbesondere 3 bis 12, vor allem 4 bis 12 und besonders 5 bis 12 Alkylenoxideinheiten.

Die Umsetzung der Alkohole bzw. Alkoholgemische mit dem/den Alkylenoxid(en) erfolgt nach üblichen, dem Fachmann bekannten Verfahren und in dafür üblichen Apparaturen.

Die Alkoxylierung kann durch starke Basen, wie Alkalihydroxide und Erdalkalihydroxide, Brönstedsäuren oder Lewissäuren, wie AlCl₃, BF₃ etc. katalysiert werden. Für eng verteilte Alkoholoxylate können Katalysatoren wie Hydrotalcit oder DMC verwendet werden.

Die Alkoxylierung erfolgt vorzugsweise bei Temperaturen im Bereich von etwa 80 bis 250 °C, bevorzugt etwa 100 bis 220 °C. Der Druck liegt vorzugsweise zwischen Umgebungsdruck und 600 bar. Gewünschtenfalls kann das Alkylenoxid eine Inertgasbeimischung, z. B. von etwa 5 bis 60 %, enthalten.

Gemäß einer besonderen Ausführungsform werden Alkoholalkoxylate der Formel (I) verwendet, worin m = 2 und der Wert von x größer als Null ist. Hierbei handelt es sich um Alkoholalkoxylate vom EO-Typ, zu denen vor allem Alkoholalkoxylate mit einem an den A1-koholteil gebundenen EO-Block gehören (m = 2; x > Null; y > Null).

Von den Alkoholalkoxylaten mit einem an den Alkoholteil gebundenen EO-Block sind EO-PO-Blockalkoxylate (m = 2; x > Null; y > Null; n = 3) und EO-PeO-Blockalkoxylate (m = 2; x > Null; y > Null; n = 5) zu nennen.

Bevorzugt sind EO-PO-Blockalkoxylate, bei denen das Verhältnis von EO zu PO (x zu y) 1:1 bis 4:1 und insbesondere 1,5:1 bis 3:1 beträgt. Dabei beträgt der Ethoxylierungsgrad (Wert von x) in der Regel 1 bis 20, vorzugsweise 2 bis 15 und insbesondere 4 bis 10, der Propoxylierungsgrad (Wert von y) in der Regel 1 bis 20, vorzugsweise 1 bis 8 und insbesondere 2 bis 5. Der Gesamtalkoxylierungsgrad, d.h. die Summe aus EO- und PO-Einheiten beträgt in der Regel 2 bis 40, vorzugsweise 3 bis 25 und insbesondere 6 bis 15.

Weiterhin bevorzugt sind EO-PeO-Blockalkoxylate, bei denen das Verhältnis von EO zu PeO (x zu y) 2 : 1 bis 25 : 1 und insbesondere 4 : 1 bis 15 : 1 beträgt. Dabei beträgt der Ethoxylierungsgrad (Wert von x) in der Regel 1 bis 50, vorzugsweise 4 bis 25 und insbesondere 6 bis 15, der Pentoxylierungsgrad (Wert von y) in der Regel 0,5 bis 20, vorzugsweise 0,5 bis 4 und insbesondere 0,5 bis 2. Der Gesamtalkoxylierungsgrad, d.h. die Summe aus EOund PeO-Einheiten beträgt in der Regel 1,5 bis 70, vorzugsweise 4,5 bis 29 und insbesondere 6,5 bis 17.

Gemäß einer weiteren besonderen Ausführungsform werden Alkoholalkoxylate der Formel (I) verwendet, worin n = 2 und die Werte von x und y beide größer als Null sind. Auch hierbei handelt es sich um Alkoholalkoxylate vom EO-Typ, bei denen der EO-Block allerdings terminal gebunden ist. Zu diesen gehören PO-EO-Blockalkoxylate (n = 2; x > Null; y > Null; m = 3) und PeO-EO-Blockalkoxylate (n = 2; x > Null; y > Null; m = 5).

Bevorzugt sind PO-EO-Blockalkoxylate, bei denen das Verhältnis von PO zu EO (x zu y) 1:10 bis 3:1 und insbesondere 1,5:1 bis 1:6 beträgt. Dabei beträgt der Ethoxylierungsgrad (Wert von y) in der Regel 1 bis 20, vorzugsweise 2 bis 15 und insbesondere 4 bis 10, der Propoxylierungsgrad (Wert von x) in der Regel 0,5 bis 10, vorzugsweise 0,5 bis 6 und insbesondere 1 bis 4. Der Gesamtalkoxylierungsgrad, d.h. die Summe aus EO- und PO-Einheiten beträgt in der Regel 1,5 bis 30, vorzugsweise 2,5 bis 21 und insbesondere 5 bis 14.

Weiterhin bevorzugt sind PeO-EO-Blockalkoxylate, bei denen das Verhältnis von PeO zu EO (x zu y) 1 : 50 bis 1 : 3 und insbesondere 1 : 25 bis 1 : 5 beträgt. Dabei beträgt der Pentoxylierungsgrad (Wert von x) in der Regel 0,5 bis 20, vorzugsweise 0,5 bis 4 und insbesondere 0,5 bis 2, der Ethoxylierungsgrad (Wert von y) in der Regel 3 bis 50, vorzugsweise 4 bis 25 und insbesondere 5 bis 15. Der Gesamtalkoxylierungsgrad, d.h. die Summe aus EO- und PeO-Einheiten beträgt in der Regel 3,5 bis 70, vorzugsweise 4,5 bis 45 und insbesondere 5,5 bis 17.

Gemäß einer bevorzugten Ausführungsform basieren die erfindungsgemäß zu verwendenden Alkoholalkoxylate auf primären, α-verzweigten Alkoholen der Formel (II), 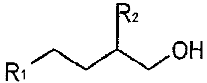 worin
- R¹, R²,: unabhängig voneinander für Wasserstoff oder C₁-C₆-Alkyl, insbesondere für C₂-C₄-Alkyl stehen.

Ganz besonders bevorzugt sind Alkoholalkoxylate auf Basis von 2-Propylheptanol. Hierzu gehören insbesondere Alkoholalkoxylate der Formel (I), worin R für einen 2-Propylheptyl-Rest steht, d.h. R¹ und R² in Formel (II) bedeuten jeweils n-Propyl.

Referenzverbindungen sind Alkoholalkoxylate, die auf C₁₃-Oxoalkoholen basieren.

Der Begriff "C₁₃-Oxoalkohol" bezeichnet in der Regel ein Alkoholgemisch, dessen Hauptkomponente aus wenigstens einem verzweigten C₁₃-Alkohol (Isotridecanol) gebildet wird. Zu derartigen C₁₃-Alkoholen gehören insbesondere Tetramethylnonanole, beispielsweise 2,4,6,8-Tetramethyl-1-nonanol oder 3,4,6,8-Tetramethyl-1-nonanol sowie ferner Ethyldimethylnonanole wie 5-Ethyl-4,7-dimethyl-1-nonanol.

Geeignete C₁₃-Alkoholgemische sind allgemein erhältlich durch Hydrierung von hydroformyliertem Trimerbuten. Insbesondere kann man
1. a) Butene zwecks Oligomerisierung mit einem geeigneten Katalysator in Kontakt bringen,
2. b) aus dem Reaktionsgemisch eine C₁₂-Olefinfraktion isolieren,
3. c) die C₁₂-Olefinfraktion durch Umsetzung mit Kohlenmonoxid und Wasserstoff in Gegenwart eines geeigneten Katalysators hydroformylieren und
4. d) hydrieren.

Vorteilhafte C₁₃-Alkoholgemisch sind im Wesentlichen halogenfrei, d. h. sie enthalten weniger als 3 Gew.-ppm, insbesondere weniger als 1 Gew.-ppm, Halogen, insbesondere Chlor.

Die Butentrimerisierung kann mittels homogener oder heterogener Katalyse erfolgen.

Beim DIMERSOL-Prozess (vergleiche Revue de l'Institut Français du Petrole, Vol. 37, No. 5, Sept./Okt. 1982, S. 639ff) werden Butene in homogener Phase in Gegenwart eines Katalysatorsystems aus einem Übergangsmetallderivat und einer metallorganischen Verbindung oligomerisiert. Typische Katalysatorsysteme sind Ni(O)-Komplexe in Verbindung mit Lewis-Säuren wie AlCl₃, BF₃, SbFs usw. oder Ni(II)-Komplexe in Verbindung mit Alkylaluminiumhalogeniden.

Alternativ können Butene in an sich bekannter Weise an einem Nickel enthaltenden heterogenen Katalysator oligomerisiert werden (Verfahrensschritt a). In Abhängigkeit von den gewählten Verfahrensbedingungen werden unterschiedliche relative Mengen an Buten-Dimeren, -Trimeren und höheren Oligomeren erhalten. Für die vorliegenden Zwecke werden die Buten-Trimere, d. h. C₁₂-Olefine, weiter verarbeitet. Im Hinblick auf den gewünschten Verzweigungsgrad des nach Hydroformylierung/Hydrierung erhaltenen C₁₃-Alkoholgemisches kann der Gehalt an iso-Butenen gewählt werden. Relativ niedrige Verzweigungsgrade erfordern einen relativ niedrigen iso-Buten-Gehalt und umgekehrt. Soll die C₁₂-Olefinfraktion beispielsweise einen ISO-Index von etwa 1,9 bis 2,3 aufweisen, ist es zweckmäßig, die eingesetzten Butene überwiegend linear zu wählen, d. h. der in der Regel eingesetzte Kohlenwasserstoffstrom sollte weniger als 5 Gew.-%, bezogen auf die Butenfraktion, iso-Buten enthalten. Die Butene können eine Beimischung gesättigter C₄-Kohlenwasserstoffe enthalten, die als Verdünnungsmittel bei der Oligomerisierung wirken.

Die verwendbaren heterogenen, Nickel enthaltenden Katalysatoren können unterschiedliche Strukturen aufweisen, wobei Nickeloxid enthaltende Katalysatoren bevorzugt sind. Es kommen an sich bekannte Katalysatoren in Betracht, wie sie in C. T. O'Connor et al., Catalysis Today, Bd. 6 (1990), S. 336-338 beschrieben sind.

Der Kohlenwasserstoffstrom (vorzugsweise C₄) enthält in der Regel 50 bis 100 Gew.-%, vorzugsweise 60 bis 90 Gew.-%, Butene und 0 bis 50 Gew.-%, vorzugsweise 10 bis 40 Gew.-%, Butane. Die Butenfraktion umfasst weniger als 5 Gew.-%, insbesondere weniger als 3 Gew.-% Isobuten, bezogen auf die Butenfraktion. Die Butenfraktion weist im Allgemeinen folgende Zusammensetzung auf (jeweils bezogen auf die Butenfraktion):

| | |
|---|---|
| 1-Buten | 1 bis 50 Gew.-% |
| cis-2-Buten | 1 bis 50 Gew.-% |
| trans-2-Buten | 1 bis 99 Gew.-% |
| iso-Buten | 1 bis 5 Gew.-% |

Als besonders bevorzugter Einsatzstoff wird das sogenannte Raffinat II verwendet, bei dem es sich um einen iso-Butenen-abgereicherten C₄-Schnitt aus einer FCC-Anlage oder einem Steamcracker handelt.

Aus dem Reaktionsaustrag der Oligomerisierungsreaktion wird in einem oder mehreren Trennschritten eine C₁₂-Olefinfraktion isoliert (Verfahrensschritt b). Geeignete Trennvorrichtungen sind die üblichen, dem Fachmann bekannten Apparaturen. Dazu zählen z. B. Destillationskolonnen, wie Bodenkolonnen, die gewünschtenfalls mit Glocken, Siebplatten, Siebböden, Ventilen, Seitenabzügen usw. ausgerüstet sein können, Verdampfer, wie Dünnschichtverdampfer, Fallfilmverdampfer, Wischblattverdampfer, Sambay-Verdampfer usw. und Kombinationen davon. Bevorzugt erfolgt die Isolierung der C₁₂-Olefinfraktion durch fraktionierte Destillation.

Der ISO-Index der C₁₂-Olefinfraktian, der die mittlere Zahl der Verzweigungen angibt, beträgt in der Regel 1 bis 4, vorzugsweise 1,9 bis 2,3, insbesondere 2,0 bis 2,3. Der ISO-Index kann z. B. ermittelt werden, indem eine Probe der C₁₂-Olefinfraktion zu den Dodecanen hydriert wird und im ¹H-NMR-Spektrum anhand der den Methylgruppen zuzuordnenden Signalfläche und der den Gesamtprotonen zuzuordnenden Signalfläche die mittlere Anzahl der Methylgruppen bestimmt wird. Der ISO-Index ergibt sich als mittlere Zahl der Methylgruppen abzüglich zwei.

Zur Herstellung eines erfindungsgemäßen Alkoholgemisches wird die isolierte C₁₂-Olefinfraktion zu C₁₃-Aldehyden hydroformyliert (Verfahrensschritt c) und anschließend zu C₁₃-Alkoholen hydriert (Verfahrensschritt d). Dabei kann die Herstellung der Alkoholgemische einstufig oder in zwei separaten Reaktionsschritten erfolgen.

Eine Übersicht über Hydroformylierungsverfahren und geeignete Katalysatoren findet sich in Beller et al., Journal of Molecular Catalysis A 104 (1995), S. 17-85.

Bevorzugt erfolgt die Hydroformylierung in Gegenwart eines Kobalt-Hydroformylierungskatalysators. Die Menge des Hydroformylierungskatalysators beträgt im Allgemeinen 0,001 bis 0,5 Gew.-%, gerechnet als Kobaltmetall, bezogen auf die Menge der zu hydroformylierenden Olefine. Die Reaktionstemperatur liegt im Allgemeinen im Bereich von etwa 100 bis 250 °C, bevorzugt 150 bis 210 °C. Die Reaktion kann bei einem erhöhten Druck von etwa 10 bis 650 bar durchgeführt werden. Es ist bevorzugt, dass die Hydroformylierung in Gegenwart von Wasser erfolgt; sie kann allerdings auch in Abwesenheit von Wasser durchgeführt werden.

Kohlenmonoxid und Wasserstoff werden üblicherweise in Form eines Gemisches, dem sogenannten Synthesegas, eingesetzt. Die Zusammensetzung des eingesetzten Synthesegases kann in weiten Bereich variieren. Das molare Verhältnis von Kohlenmonoxid und Wasserstoff beträgt in der Regel etwa 2,5:1 bis 1:2,5. Ein bevorzugtes Verhältnis liegt bei etwa 1:1,5.

Der homogen im Reaktionsmedium gelöste Kobaltkatalysator kann vom Hydroformylierungsprodukt geeigneterweise abgetrennt werden, indem der Reaktionsaustrag der Hydroformylierung in Gegenwart einer sauren wässrigen Lösung mit Sauerstoff oder Luft behandelt wird.

Dabei wird der Kobaltkatalysator unter Bildung von Kobalt(II)-salzen oxidativ zerstört. Die Kobalt(II)-salze sind wasserlöslich und werden in die wässrige Phase extrahiert, die abgetrennt und in das Hydroformylierungsverfahren zurückgeführt werden kann.

Die bei der Hydroformylierung erhaltenen rohen Aldehyde bzw. Aldehyd/Alkohol-Gemische können vor der Hydrierung gewünschtenfalls nach üblichen, dem Fachmann bekannten Verfahren isoliert und gegebenenfalls gereinigt werden.

Zur Hydrierung werden die bei der Hydroformylierung erhaltenen Reaktionsgemische mit Wasserstoff in Gegenwart eines Hydrierkatalysators umgesetzt.

Geeignete Hydrierkatalysatoren sind im Allgemeinen Übergangsmetalle, wie z. B. Cr, Mo, W, Fe, Rh, Co, Ni, Pd, Pt, Ru usw. oder deren Mischungen, die zur Erhöhung der Aktivität und Stabilität auf Trägern, wie z. B. Aktivkohle, Aluminiumoxid, Kieselgur usw. aufgebracht werden können. Zur Erhöhung der katalytischen Aktivität können Fe, Co und bevorzugt Ni, auch in Form der Raney-Katalysatoren als Metallschwamm mit einer sehr großen Oberfläche verwendet werden. Bevorzugt wird für die Herstellung der erfindungsgemäßen Tensidalkohole ein Co/Mo-Katalysator eingesetzt. Die Hydrierung der Oxo-Aldehyde erfolgt in Abhängigkeit von der Aktivität des Katalysators vorzugsweise bei erhöhten Temperaturen und erhöhtem Druck. Vorzugsweise liegt die Hydriertemperatur bei etwa 80 bis 250 °C, bevorzugt liegt der Druck bei etwa 50 bis 350 bar.

Weitere geeignete C₁₃-Alkoholgemische sind dadurch erhältlich, dass man
1. a) ein C₄-Olefin-Gemisch der Metathese unterwirft,
2. b) aus dem Metathesegemisch Olefine mit 6 C-Atomen abtrennt,
3. c) die abgetrennten Olefine einzeln oder im Gemisch einer Dimerisierung zu Olefingemischen mit 12 C-Atomen unterzieht, und
4. d) das erhaltene Olefingemisch, gegebenenfalls nach einer Fraktionierung, der Derivatisierung zu einem Gemisch von C13-Oxo-alkoholen unterwirft.

Die Grundzüge der im Verfahrensschritt a) eingesetzten Metathese sind beispielsweise in Ullmann's Ecyclopedia of Industrial Chemistry, 5. Aufl., Band A18, S.235/236 beschrieben worden. Weitere Informationen zur Durchführung des Verfahrens können beispielsweise K.J. Ivin, "Olefin Metathesis, Academic Press, London, (1983); Houben-Weyl, E18, 1163-1223; R.L. Banks, Discovery and Development of Olefin Disproportionation, CHEMTECH (1986), February, 112-117, entnommen werden.

Bei der Anwendung der Metathese auf die in den C₄-Olefin-Strömen enthaltenen Hauptbestandteile Buten-1 und Buten-2 werden in Gegenwart von geeigneten Katalysatoren Olefine mit 5 bis 10 C-Atomen, vorzugsweise mit 5 bis 8 C-Atomen, insbesondere aber Penten-2 und Hexen-3 gebildet.

Geeignete Katalysatoren sind vorzugsweise Molybdän-, Wolframoder Rhenium-Verbindungen. Es ist besonders zweckmäßig, die Reaktion heterogenkatalysiert auszuführen, wobei die katalytisch wirksamen Metalle insbesondere in Verbindung mit Trägern aus Al₂O₃ oder SiO₂ eingesetzt werden. Beispiele für derartige Katalysatoren sind MoO₃ oder WO₃ auf SiO₂, oder Re₂O₇ auf Al₂O₃.

Besonders günstig ist es, die Metathese in Gegenwart eines Rheniumkatalysators auszuführen, da in diesem Fall besonders milde Reaktionsbedingungen möglich sind. So kann die Metathese in diesem Fall bei einer Temperatur von 0 bis 50 °C und bei niedrigen Drukken von ca. 0,1 bis 0,2 MPa ausgeführt werden.

Bei der Dimerisierung der im Metatheseschritt erhaltenen Olefine oder Olefingemische erhält man Dimerisierungsprodukte, die im Hinblick auf die weitere Verarbeitung auf Tensidalkohole besonders günstige Komponenten und eine besonders vorteilhafte Zusammensetzungen aufweisen, wenn man einen Dimerisierungskatalysator einsetzt, der wenigstens ein Element der VIII. Nebengruppe des periodischen Systems enthält, und man die Katalysatorzusammensetzung und die Reaktionsbedingungen so wählt, dass ein Dimerengemisch erhalten wird, welches weniger als 10 Gew.-% von Verbindungen enthält die ein Strukturelement der Formel III (Vinylidengruppe) 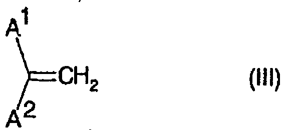 worin A¹ und A² aliphatische Kohlenwasserstoffreste sind, aufweisen.

Vorzugsweise werden für die Dimerisierung die in dem Metathesierungsprodukt enthaltenen internen, linearen Pentene und Hexene eingesetzt. Besonders bevorzugt ist der Einsatz von 3-Hexen.

Die Dimerisierung kann homogenkatalysiert oder heterogenkatalysiert durchgeführt werden. Bevorzugt ist die heterogene Verfahrensweise, da hierbei einerseits die Katalysatorabtrennung vereinfacht und das Verfahren damit wirtschaftlicher ist, zum anderen werden keine umweltschädlichen Abwässer erzeugt, wie sie gewöhnlich bei der Abtrennung gelöster Katalysatoren, zum Beispiel durch Hydrolyse, anfallen. Ein weiterer Vorteil des heterogenen Verfahrens besteht darin, dass das Dimerisierungsprodukt keine Halogene, insbesondere Chlor oder Fluor, enthält. Homogen lösliche Katalysatoren enthalten im Allgemeinen halogenidhaltige Liganden oder sie werden in Kombination mit halogenhaltigen Cokatalysatoren eingesetzt. Aus solchen Katalysatorsystemen kann Halogen in die Dimerisierungsprodukte eingebaut werden, was sowohl die Produktqualität als auch die Weiterverarbeitung, insbesondere die Hydroformylierung zu Tensidalkoholen erheblich beeinträchtigt.

Zur heterogenen Katalyse werden zweckmäßigerweise Kombinationen von Oxiden von Metallen der VIII. Nebengruppe mit Aluminiumoxid auf Trägermaterialien aus Silizium- und Titanoxiden wie sie beispielsweise aus der DE-A-43 39 713 bekannt sind, eingesetzt. Der heterogene Katalysator kann im Festbett - dann vorzugsweise in grobkörniger Form als 1 bis 1,5 mm-Splitt - oder suspendiert (Partikelgröße 0.05 bis 0,5 mm) eingesetzt werden. Die Dimerisierung wird bei heterogener Durchführung zweckmäßigerweise bei Temperaturen von 80 bis 200 °C, vorzugsweise von 100 bis 180 °C, unter dem bei der Reaktionstemperatur herrschenden Druck, gegebenenfalls auch unter einem Schutzgasüberdruck, im geschlossenen System ausgeführt. Zur Erzielung optimaler Umsätze wird das Reaktionsgemisch mehrfach im Kreis geführt, wobei kontinuierlich ein bestimmter Anteil des zirkulierenden Produkts ausgeschleust und durch Ausgangsmaterial ersetzt wird.

Bei der Dimerisierung werden Mischungen einfach ungesättigter Kohlenwasserstoffe erhalten, deren Komponenten überwiegend die doppelte Kettenlänge haben wie die Ausgangs-Olefine.

Die Dimerisierungskatalysatoren und die Reaktionsbedingungen werden im Rahmen der obigen Angaben zweckmäßigerweise so gewählt, dass mindestens 80 % der Komponenten des Dimerisierungsgemisches im Bereich von 1/4 bis 3/4, vorzugsweise von 1/3 bis 2/3, der Kettenlänge ihrer Hauptkette eine Verzweigung, oder zwei Verzweigungen an benachbarten C-Atomen, aufweisen.

Sehr charakteristisch für die so hergestellten Olefingemische ist ihr hoher Anteil - in der Regel über 75 %, insbesondere über 80 % - von Komponenten mit Verzweigungen und der geringe Anteil - in der Regel unter 25, insbesondere unter 20 % - unverzweigter Olefine. Ein weiteres Charakteristikum ist, dass an den Verzweigungsstellen der Hauptkette überwiegend Gruppen mit (y-4) und (y-5) C-Atomen gebunden sind, wobei y die Kohlenstoffatom-Anzahl des für die Dimerisierung eingesetzten Monomers ist. Der Wert (y-5) = 0 bedeutet, dass keine Seitenkette vorhanden ist.

Bei den so hergestellten C₁₂-Olefingemischen trägt die Hauptkette an den Verzweigungspunkten vorzugsweise Methyl- oder Ethylgruppen.

Die Stellung der Methyl- und Ethylgruppen an der Hauptkette ist ebenfalls charakteristisch: Bei Monosubstitution befinden sich die Methyl- oder Ethylgruppen in der Position P = (n/2)-m der Hauptkette, wobei n die Länge der Hauptkette und m die Kohlenstoffanzahl der Seitengruppen ist, bei Disubstitutionsprodukten befindet sich ein Substituent in der Position P, der andere am benachbarten C-Atom P+1. Die Anteile von Monosubstitutionsprodukten (Einfachverzweigung) am erfindungsgemäß hergestellten Olefingemisch liegen charakteristischerweise insgesamt im Bereich von 40 bis 75 Gew.-%, die Anteile an doppeltverzweigten Komponenten im Bereich von 5 bis 25 Gew.-%.

Es wurde ferner gefunden, dass die Dimerisierungsgemische dann besonders gut weiter zu derivatisieren sind, wenn die Lage der Doppelbindung bestimmte Anforderungen erfüllt. In diesen vorteilhaften Olefingemischen ist die Lage der Doppelbindungen relativ zu den Verzweigungen dadurch charakterisiert, dass das Verhältnis der "aliphatischen" Wasserstoffatome zu "olefinischen" Wasserstoffatomen im Bereich H_{aliph.} : H_{olefin}. = (2*n-0,5) : 0,5 bis (2*n-1,9) : 1,9 liegt, wobei n die Kohlenstoffatom-Anzahl des bei der Dimerisierung erhaltenen Olefins ist.

(Als "aliphatische" Wasserstoffatome werden solche bezeichnet, die an Kohlenstoffatome gebunden sind, die an keiner C=C-Doppelbindung (Pi-Bindung) beteiligt sind, als "olefinische" Wasserstoffatome solche, die an ein Kohlenstoffatom gebunden ist, das eine Pi-Bindung betätigt.)

Besonders bevorzugt sind Dimerisierungsgemische, bei denen das Verhältnis
H_{aliph.} : H_{olefin.} = (2*n-1,0) : 1 bis (2*n-1,6) : 1,6 ist.

Die so hergestellten Olefingemische werden zunächst durch Umsetzung mit Kohlenmonoxid und Wasserstoff in Gegenwart von geeigneten, vorzugsweise kobalt- oder rhodiumhaltigen Katalysatoren zu Tensidalkoholen (Oxoalkoholen), verzweigten primären Alkoholen, hydroformyliert.

Eine gute Übersicht über das Verfahren der Hydroformylierung mit zahlreichen weiteren Literaturhinweisen findet sich beispielsweise in dem umfangreichen Aufsatz von Beller et al. in Journal of Molecular Catalysis, A104 (1995) 17-85 oder in Ullmanns Encyclopedia of Industrial Chemistry, Bd.A5 (1986), Seite 217 ff., Seite 333, sowie die diesbezüglichen Literaturverweise.

Die dort gegebenen umfassenden Informationen ermöglichen es dem Fachmann, auch die erfindungsgemäßen verzweigten Olefine zu hydroformylieren. Bei dieser Reaktion wird CO und Wasserstoff an olefinische Doppelbindungen angelagert, wobei gemäß dem folgenden Reaktionsschema Mischungen aus Aldehyden und Alkanolen erhalten werden:

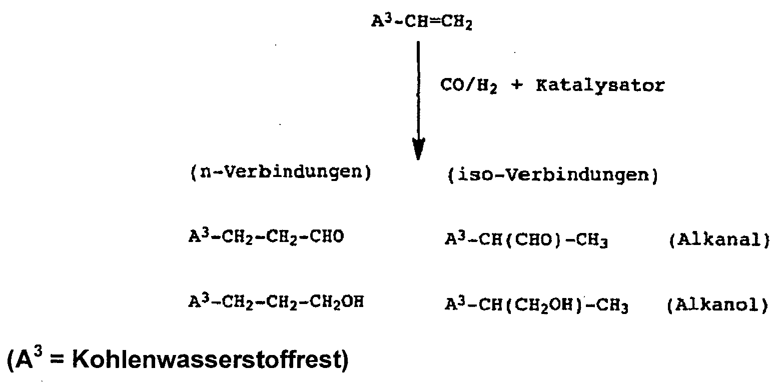

Das Molverhälnis von n- und iso-Verbindungen im Reaktionsgemisch liegt je nach den gewählten Verfahrensbedingungen der Hydroformylierung und dem eingesetzten Katalysator in der Regel im Bereich von 1:1 bis 20:1. Die Hydroformylierung wird normalerweise im Temperaturbereich von 90 bis 200°C und bei einem CO/H₂-Druck von 2,5 bis 35 MPa (25 bis 350 bar) ausgeführt. Das Mischungsverhältnis von Kohlenmonoxid zu Wasserstoff richtet sich danach, ob vorzugsweise Alkanale oder Alkanole erzeugt werden sollen. Man arbeitet zweckmäßigerweise im Bereich CO:H von 10:1 bis 1:10, vorzugsweise 3:1 bis 1:3, wobei man zur Herstellung von Alkanalen den Bereich der niedrigen Wasserstoffpartialdrucke, zur Herstellung von Alkanolen den Bereich der hohen Wasserstoffpartialdrucke, z.B. CO:H₂ = 1:2, wählt.

Als Katalysatoren eignen sich vor allem Metallverbindungen der allgemeinen Formel HM(CO)₄ oder M₂(CO)₈, wobei M ein Metallatom, vorzugsweise ein Kobalt-, Rhodium- oder Rutheniumatom ist.

Im Allgemeinen werden unter Hydroformylierungsbedingungen aus den jeweils eingesetzten Katalysatoren oder Katalysatorvorstufen katalytisch aktive Spezies der allgemeinen Formel HₓM_{y}(CO)_{z}L_{q} gebildet, worin M für ein Metall der VIII. Nebengruppe, L für einen Liganden, der ein Phosphin, Phosphit, Amin, Pyridin oder jede andere Donorverbindung, auch in polymerer Form, sein kann, und q, x, y und z für ganze Zahlen, abhängig von der Wertigkeit und Art des Metalls sowie der Bindigkeit des Liganden L, stehen, wobei q auch 0 sein kann.

Bei dem Metall M handelt es sich vorzugsweise um Kobalt, Ruthenium, Rhodium, Palladium, Platin, Osmium oder Iridium und insbesondere um Kobalt, Rhodium oder Ruthenium.

Geeignete Rhodiumverbindungen oder Komplexe sind z.B. Rhodium(II)- und Rhodium(III)-salze, wie Rhodium(III)-chlorid, Rhodium(III)-nitrat, Rhodium(III)-sulfat, Kalium-Rhodium-sulfat, Rhodium(II) bzw. Rhodium(III)-caboxylat, Rhodium(II)- und Rhodium(III)-acetat, Rhodium(III)-oxid, Salze der Rhodium(III)-säure, wie z.B. Trisammonium-hexachlororhodat-(III). Weiterhin eignen sich Rhodiumkomplexe wie Rhodiumbiscarbonyl-acetylacetonat, Acetylacetonato-bisethylen-Rhodium-(I). Vorzugsweise werden Rhodiumbiscarbonyl-acetylacetonat oder Rhodiumacetat eingesetzt.

Geeignete Kobaltverbindungen sind zum Beispiel Kobalt(II)-chlorid, Kobalt(II)-sulfat, Kobalt(II)-carbonat, Kobalt(II)-nitrat, deren Amin- oder Hydratkomplexe, Kobaltcarbocylate wie Kobaltacetat, Kobaltethylhexanoat, Kobaltnaphthanoat, sowie der Kobaltcaprolactamat-Komplex. Auch hier können die Carbonylkomplexe des Kobalts wie Dikobaltoctocarbonyl, Tetrakobaltdodecacarbonyl und Hexakobalthexadecacarbonyl eingesetzt werden.

Die genannten Verbindungen des Kobalts, Rhodiums und Rutheniums sind im Prinzip bekannt und in der Literatur hinreichend beschrieben, oder sie können vom Fachmann analog zu den bereits bekannten Verbindungen hergestellt werden.

Die Hydroformylierung kann unter Zusatz von inerten Lösungs- oder Verdünnungsmitteln oder ohne solchen Zusatz durchgeführt werden. Geeignete inerte Zusätze sind beispielsweise Aceton, Methylethylketon, Cyclohexanon, Toluol, Xylol, Chlorbenzol, Methylenchlorid, Hexan, Petrolether, Acetonitril sowie die hochsiedenden Anteile aus der Hydroformylierung der Dimerisierungsprodukte.

Sofern das erhaltene Hydroformylierungsprodukt einen zu hohen Aldehydgehalt aufweist, kann dieser auf einfache Weise durch eine Hydrierung, zum Beispiel mit Wasserstoff in Gegenwart von RaneyNickel oder unter Verwendung anderer für Hydrierungsreaktionen bekannter, insbesondere Kupfer, Zink, Kobalt, Nickel, Molybdän, Zirkon oder Titan enthaltender Katalysatoren, beseitigt werden. Dabei werden die Aldehydanteile weitgehend zu Alkanolen hydriert. Eine praktisch restlose Beseitigung von Aldehydanteilen im Reaktionsgemisch läßt sich gewünschtenfalls durch Nachhydrierung, beispielsweise unter besonders schonenden und ökonomischen Bedingungen mit einem Alkaliborhydrid, erreichen.

Aus dem nach der Hydrierung erhaltenen Reaktionsgemisch kann nach üblichen, dem Fachmann bekannten Reinigungsverfahren, insbesondere durch fraktionierte Destillation, das erfindungsgemäße C₁₃-Alkoholgemisch rein gewonnen werden.

C₁₃-Alkoholgemische weisen in der Regel einen mittleren Verzweigungsgrad von 1 bis 4, vorzugsweise von 2,1 bis 2,5, insbesondere 2,2 bis 2,4 auf. Als Verzweigungsgrad ist die Zahl der Methylgruppen in einem Molekül des Alkohols abzüglich 1 definiert. Der mittlere Verzweigungsgrad ist der statistische Mittelwert der Verzweigungsgrade der Moleküle einer Probe. Die mittlere Zahl der Methylgruppen in den Molekülen einer Probe kann leicht ¹H-NMR-spektroskopisch ermittelt werden. Hierzu wird die den Methylprotonen entsprechende Signalfläche im ¹H-NMR-Spektrum einer Probe durch drei dividiert und zu der durch zwei dividierten Signalfläche der Methylenprotonen in der CH₂-OH-Gruppe ins Verhältnis gesetzt.

Im Rahmen dieser Ausführungsform auf Basis von C₁₃-Oxoalkoholen sind insbesondere diejenigen Alkoholalkoxylate bevorzugt, die Blockalkoxylate vom EO/PO-Typ sind.

Die Alkoxylierungsgrade der erfindungsgemäß zu verwendenden EO/ PO-Blockalkoxylate hängt von der Anordnung der Blöcke ab. Sind die PO-Blöcke terminal angeordnet, so beträgt das Verhältnis von EO-Einheiten zu PO-Einheiten in der Regel wenigstens 1, vorzugsweise 1:1 bis 4:1 und insbesondere 1,5:1 bis 3:1. Dabei beträgt der Ethoxylierungsgrad in der Regel 1 bis 20, vorzugsweise 2 bis 15 und insbesondere 4 bis 10, der Propoxylierungsgrad in der Regel 1 bis 20, vorzugsweise 1 bis 8 und insbesondere 2 bis 5. Der Gesamtalkoxylierungsgrad, d.h. die Summe aus EO- und PO-Einheiten beträgt in der Regel 2 bis 40, vorzugsweise 3 bis 25 und insbesondere 6 bis 15. Sind die EO-Blöcke hingegen terminal angeordnet, so ist das Verhältnis von PO-Blöcken zu EO-Blöcken weniger kritisch und beträgt in der Regel 1:10 bis 3:1, vorzugsweise 1:1,5 bis 1:6. Dabei beträgt der Ethoxylierungsgrad in der Regel 1 bis 20, vorzugsweise 2 bis 15 und insbesondere 4 bis 10, der Propoxylierungsgrad in der Regel 0,5 bis 10, vorzugsweise 0,5 bis 6 und insbesondere 1 bis 4. Der Gesamtalkoxylierungsgrad beträgt in der Regel 1,5 bis 30, vorzugsweise 2,5 bis 21 und insbesondere 5 bis 14.

Erfindungsgemäß werden Alkoholalkoxylate auf Basis von C₁₀-Oxoalkoholen verwendet.

Der Begriff "C₁₀-Oxoalkohol" steht in Analogie zu dem bereits erläuterten Begriff "C₁₃-Oxoalkohol" für C₁₀-Alkoholgemische, dessen Hauptkomponente aus wenigstens einem verzweigten C₁₀-Alkohol (Isodecanol) gebildet wird.

Geeignete C₁₀-Alkoholgemische sind allgemein erhältlich durch Hydrierung von hydroformyliertem Trimerpropen. Insbesondere kann man
1. a) Propene zwecks Oligomerisierung mit einem geeigneten Katalysator in Kontakt bringen,
2. b) aus dem Reaktionsgemisch eine C₉-Olefinfraktion isolieren,
3. c) die Cg-Olefinfraktion durch Umsetzung mit Kohlenmonoxid und Wasserstoff in Gegenwart eines geeigneten Katalysators hydroformylieren und
4. d) hydrieren.

Besondere Ausführungsformen dieser Vorgehensweise ergeben sich in Analogie zu den oben für die Hydrierung von hydroformyliertem Trimerbuten beschriebenen Ausgestaltungen.

Aus den vorstehenden Ausführungen folgt, dass insbesondere die erfindungsgemäß zu verwendenden C₁₀-Oxoalkohole auf Olefinen basieren, die bereits verzweigt sind. Mit anderen Worten, Verzweigungen sind nicht nur auf die Hydroformylierungsreaktion zurückzuführen, wie es bei der Hydroformylierung geradkettiger Olefine der Fall wäre. Deshalb ist der Verzweigungsgrad erfindungsgemäß zu verwendender Alkoxylate in der Regel größer als 1.

Die erfindungsgemäß zu verwendenden Alkoxylate weisen in der Regel einen relativ geringen Kontaktwinkel auf. Besonders bevorzugt sind Alkoxylate, deren Kontaktwinkel weniger als 120° und vorzugsweise weniger als 100°beträgt, wenn dieser anhand einer 2 Gew.-% Alkoxylat enthaltenden, wässrigen Lösung auf einer Paraffinoberfläche in an sich bekannter Art und Weise bestimmt wird.

Die oberflächenaktiven Eigenschaften der Alkoxylate hängen einem Aspekt zufolge von Art und Verteilung der Alkoxylat-Gruppierung ab. Die nach der Pendant Drop Methode bestimmbare Oberflächenspannung erfindungsgemäß zu verwendender Alkoxylate liegt vorzugsweise in einem Bereich von 25 bis 70 mN/m und insbesondere 28 bis 50 mN/m für eine 0,1 Gew.% Alkoxylat enthaltende Lösung, in einem Bereich von 25 bis 70 mN/m und insbesonden 28 bis 45 mN/m für eine 0,5 Gew.% Alkoxylat enthaltende Lösung. Erfindungsgemäß bevorzugt zu verwendende Alkoxylate qualifizieren daher als amphiphile Substanzen.

Dementsprechend beschrieben sind auch Mittel, umfassend
1. (a) wenigstens einen Wirkstoff zur Pflanzenbehandlung; und
2. (b) wenigstens einen alkoxylierten verzweigten Alkohol.

Anteile der Komponente (b) am Gesamtgewicht des Mittels von mehr als 1 Gew.-%, vorzugsweise von mehr als 5 Gew.-% und insbesondere von mehr als 10 Gew.-% sind von Vorteil. Andererseits sind Anteile der Komponente (b) am Gesamtgewicht des Mittels von weniger als 50 Gew.-%, vorzugsweise von weniger als 45 Gew.-% und insbesondere von weniger als 40 Gew.-% in der Regel zweckmäßig.

Der Wirkstoff (Komponente (a)) kann ausgewählt sein unter Herbiziden, Fungiziden, Insektiziden, Akariziden, Nematiziden, sowie Wirkstoffen, die das Pflanzenwachstum regulieren.

Herbizide Pflanzenschutzmittel können einen oder mehrere beispielsweise der folgenden herbiziden Pflanzenschutz-Wirkstoffe enthalten:
1,3,4-Thiadiazole wie Buthidazole und Cyprazole, Amide wie Allidochlor, Benzoylpropethyl, Bromobutide, Chlorthiamid, Dimepiperate, Dimethenamid, Diphenamid, Etobenzanid, Flampropmethyl, Fosamin, Isoxaben, Monalide, Naptalame, Pronamid, Propanil, Aminophosphorsäuren wie Bilanafos, Buminafos, Glufosinateammonium, Glyphosate, Sulfosate, Aminotriazole wie Amitrol, Anilide wie Anilofos, Mefenacet, Aryloxyalkansäure wie 2,4-D, 2,4-DB, Clomeprop, Dichlorprop, Dichlorprop-P, Dichlorprop-P, Fenoprop, Fluroxypyr, MCPA, MCPB, Mecoprop, Mecoprop-P, Napropamide, Napropanilide, Triclopyr, Benzoesäuren wie Chloramben, Dicamba, Benzothiadiazinone wie Bentazon, Bleacher wie Clomazone, Diflufenican, Fluorochloridone, Flupoxam, Fluridone, Pyrazolate, Sulcotrione, Carbamate wie Carbetamid, Chlorbufam, Chlorpropham, Desmedipham, Phenmedipham, Vernolate, Chinolinsäuren wie Quinclorac, Quinmerac, Dichlorpropionsäuren wie Dalapon, Dihydrobenzofurane wie Ethofumesate, Dihydrofuran-3-on wie Flurtamone, Dinitroaniline wie Benefin, Butralin, Dinitramin, Ethalfluralin, Fluchloralin, Isopropalin, Nitralin, Oryzalin, Pendimethalin, Prodiamine, Profluralin, Trifluralin, Dinitrophenole wie Bromofenoxim, Dinoseb, Dinoseb-acetat, Dinoterb, DNOC, Minoterb-Acetat, Diphenylether wie Acifluorfen-sodium, Aclonifen, Bifenox, Chlornitrofen, Difenoxuron, ethoxyfen, Fluorodifen, Fluoroglycofen-ethyl, Fomesafen, Furyloxyfen, Lactofen, Nitrofen, Nitrofluorfen, Oxyfluorfen, Dipyridyle wie Cyperquat, Difenzoquat-methylsulfat, Diquat, Paraquat-dichlorid, Imidazole wie Isocarbamid, Imidazolinone wie Imazamethapyr, Imazapyr, Imazaquin, Imazethabenz-methyl, Imazethapyr, Oxadiazole wie Methazole, Oxadiargyl, Oxadiazon, Oxirane wie Tridiphane, Phenole wie Bromoxynil, Ioxynil, Phenoxyphenoxypropionsäureester wie Clodinafop, Cyhalofop-butyl, Diclofop-methyl, Fenoxaprop-ethyl, Fenoxaprop-p-ethyl, Fenthiapropethyl, Fluazifop-butyl, Fluazifop-p-butyl, Haloxyfop-ethoxyethyl, Haloxyfop-methyl, Haloxyfop-p-methyl, Isoxapyrifop, Propaquizafop, Quizalofop-ethyl, Quizalofop-p-ethyl, Quizalofop-tefuryl, Phenylessigsäuren wie Chlorfenac, Phenylpropionsäuren wie Chlorophenprop-methyl, ppi-Wirkstoffe wie Benzofenap, Flumiclorac-pentyl, Flumioxazin, Flumipropyn, Flupropacil, pyrazoxyfen, Sulfentrazone, Thidiazimin, Pyrazole wie Nipyraclofen, Pyridazine wie Chloridazon, Maleic hydrazide, Norflurazon, Pyridate, Pyridincarbonsäuren wie Clopyralid, Dithiopyr, Picloram, Thiazopyr, Pyrimidylether wie Pyrithiobacsäure, Pyrithiobac-sodium, KIH-2023, KIH-6127, Sulfonamide wie Flumetsulam, Metosulam, Triazolcarboxamide wie Triazofenamid, Uracile wie Bromacil, Lenacil, Terbacil, ferner Benazolin, Benfuresate, Bensulide, Benzofluor, Butamifos, Cafenstrole, Chlorthal-dimethyl, Cinmethylin, Dichlobenil, Endothall, Fluorbentranil, Mefluidide, Perfluidone, Piperophos.

Bevorzugte herbizide Pflanzenschutz-Wirkstoffe sind solche vom Sulfonylharnstoff-Typ wie Amidosulfuron, Azimsulfuron, Bensulfuron-methyl, Chlorimuron-ethyl, Chlorsulfuron, Cinosulfuron, Cyclosulfamuron, Ethametsulfuron-methyl, Flazasulfuron, Halosulfuron-methyl, Imazosulfuron, Metsulfuron-methyl, Nicosulfuron, Primisulfuron, Prosulfuron, Pyrazosulfuron-ethyl, Rimsulfuron, Sulfometuron-methyl, Thifensulfuron-methyl, Triasulfuron, Tribenuron-methyl, Triflusulfuron-methyl, Tritosulfuron.

Weiterhin bevorzugte herbizide Pflanzenschutz-Wirkstoffe sind solche vom Cyclohexenon-Typ wie Alloxydim, Clethodim, Cloproxydim, Cycloxydim, Sethoxydim und Tralkoxydim.

Ganz besonders bevorzugte herbizide Wirkstoffe vom Cyclohexenon-Typ sind: Tepraloxydim (vgl. AGROW, Nr. 243, 3.11.95, Seite 21, Caloxydim) und 2-(1-[2-{4-Chlorphenoxy}propyloxyimino]butyl)-3-hydroxy-5-(2H-tetrahydrothiopyran-3-yl)-2-cyclohexen-1-on und vom Sulfonylharnstoff-Typ:
N-(((4-methoxy-6-[trifluormethyl]-1,3,5-triazin-2-yl)amino)carbonyl)-2-(trifluormethyl)-benzolsulfonamid.

Die fungiziden Mittel enthalten einen oder mehrere beispielsweise der folgenden fungiziden Wirkstoffe: Schwefel, Dithiocarbamate und deren Derivate, wie Ferridimethyl-dithiocarbamat, Zinkdimethyldithiocarbamat, Zinkethylenbisdithiocarbamat, Manganethylenbisdithiocarbamat, Mangan-Zink-ethylendi-amin-bis-dithiocarbamat, Tetramethyl-thiuramdisulfide, Ammoniak-Komplex von Zink-(N,N-ethylen-bis-dithiocarbamat), Ammoniak-Komplex von Zink-(N,N'-propylen-bis-dithiocarbamat), Zink-(N,N'-propylenbis-dithiocarbamat), N,N'-Polypropylen-bis-(thiocarba-moyl)disulfid;
Nitroderivate, wie Dinitro-(1-methylheptyl)-phenylcrotonat, 2-sec-Butyl-4,6-dinitrophenyl-3,3-dimethylacrylat, 2-sec-Butyl-4,6-dinitrophenyl-isopropylcarbonat, 5-Nitro-isophthalsäure-di-isopropylester;
heterocyclische Substanzen, wie 2-Heptadecyl-2-imidazolin-acetat, 2,4-Dichlor-6-(o-chloranilino)-s-triazin, O,O-Diethyl-phthal-imidophosphonothioat, 5-Amino-1-[bis-(dimethylamino)-phosphinyl]-3-phenyl-1,2,4-triazol, 2,3-Dicyano-1,4-dithioanthrachinon, 2-Thio-1,3-dithiolo[4,5-b]chinoxalin, 1-(Butylcarbamoyl)-2-benz-imidazol-carbaminsäuremethylester, 2-Methoxycarbonylamino-benz-imidazol, 2-(Furyl-(2))-benzimidazol, 2-(Thiazolyl-(4)-benz-imidazol, N-(1,1,2,2-Tetrachlorethylthio)-tetrahydrophthalimid, N-Trichlormethylthio-tetrahydrophthalimid, N-Trichlormethylthio-phthalimid,
N-Dichlorfluormethylthio-N',N'-dimethyl-N-phenyl-schwefelsäure-diamid, 5-Ethoxy-3-trichlormethyl-1,2,3-thiadiazol, 2-Rhodan-methylthiobenzthiazol, 1,4-Dichlor-2,5-dimethoxybenzol, 4-(2-Chlorphenylhydrazono)-3-methyl-5-isoxazolon, Pyridin-2-thio-1-oxid, 8-Hydroxychinolin bzw. dessen Kupfersalz, 2,3-Dihydro-5-carboxanilido-6-methyl-1,4-oxathiin, 2,3-Dihydro-5-carboxani-lido-6-methyl-1,4-oxathün-4,4-dioxid, 2-Methyl-5,6-dihydro-4H-pyran-3-carbonsäure-anilid, 2-Methyl-furan-3-carbonsäureanilid, 2,5-Dimethyl-furan-3-carbonsäureanilid, 2,4,5-Trimethyl-furan-3-carbonsäureanilid, 2,5-Dimethyl-furan-3-carbonsäurecyclohexyl-amid, N-Cyclohexyl-N-methoxy-2,5-dimethyl-furan-3-carbonsäure-amid, 2-Methyl-benzoesäure-anilid, 2-Iod-benzoesäure-anilid, N-Formyl-N-morpholin-2,2,2-trichlorethylacetal, Piperazin-1,4-di-ylbis-(1-(2,2,2-trichlor-ethyl)-formamid, 1-(3,4-Dichloranilino)-1-formylamino-2,2,2-triahlorethan, 2,6-Dimethyl-N-tridecylmorpholin bzw. dessen Salze, 2,6-Dimethyl-N-cyclododecyl-morpholin bzw. dessen Salze, N-[3-(p-tert.-Butylphenyl)-2-methylpropyl]-cis-2,6-dimethyl-morpholin, N-[3-(p-tert.-Butylphenyl)-2-methyl-propyl]-piperidin, 1-[2-(2,4-Dichlorphenyl)-4-ethyl-1,3-dioxolan-2-yl-ethyl]-1H-1,2,4-triazol, 1-[2-(2,4-Dichlorphenyl)-4-n-pro-pyl-1,3-dioxolan-2-yl-ethyl]-1H-1,2,4-triazol, N-(n-Propyl)-N-(2,4,6-trichlorphenoxyethyl)-N'-imidazol-yl-harnstoff, 1-(4-Chlorphenoxy)-3,3-dimethyl-1-(1H-1,2,4-triazol-1-yl)-2-butanon, 1-(4-Chlorphenoxy)-3,3-dimethyl-1-(1H-1,2,4-triazol-1-yl)-2-butanol, (2RS,3RS)-1-[3-(2-Chlorphenyl)-2-(4-fluorphenyl)-oxiran-2-ylmethyl]-1H-1,2,4-triazol, α-(2-Chlorphenyl)-α-(4-chlorphenyl)-5-pyrimidin-methanol, 5-Butyl-2-dimethylamino-4-hydroxy-6-methyl-pyrimidin, Bis-(p-chlorphenyl)-3-pyridinmethanol, 1,2 -Bis-(3-ethoxycarbonyl2-thioureido)-benzol, 1,2-Bis-(3-methoxycarbo-nyl-2-thioureido)-benzol,
Strobilurine wie Methyl-E-methoxyimino-(α-(o-tolyloxy)-o-tolyl]-acetat, Methyl-E-2-{2-[6-(2-cyanophenoxy)-pyrimidin-4-yloxy]-phe-nyl}-3-methoxyacrylat, Methyl-E-methoxyimino-[α-(2-phenoxyphe-nyl)]-acetamid, Methyl-E-methoxyimino-[α-(2,5-dimethylphenoxy)-o-tolyl]-acetamid,
Anilinopyrimidine wie N-(4,6-Dimethylpyrimidin-2-yl)-anilin, N-[4-Methyl-6-(1-propinyl)-pyrimidin-2-yl]-anilin, N-[4-Methyl-6-cyclopropyl-pyrimidin-2-yl]-anilin,
Phenylpyrrole wie 4-(2,2-Difluor-1,3-benzodioxol-4-yl)-pyrrol3-carbonitril,
Zimtsäureamide wie 3-(4-Chlorphenyl)-3-(3,4-dimethoxyphenyl)-acrylsäuremorpholid,
sowie verschiedene Fungizide, wie Dodecylguanidinacetat, 3-(3-(3,5-Dimethyl-2-oxycyclohexyl)-2-hydroxyethyl)-glutarimid, Hexa-chlorbenzol, DL-Methyl-N-(2,6-dimethyl-phenyl)-N-furoyl(2)-ala-ninat, DL-N-(2,6-Dimethyl-phenyl)-N-(2'-methoxyacetyl)-alanin-methylester, N-(2,6-Dimethylphenyl)-N-chloracetyl-D,L-2-amino-butyrolacton, DL-N-(2,6-Dimethylphenyl)-N-(phenylacetyl)-alanin-methylester, 5-Methyl-5-vinyl-3-(3,5-dichlorphenyl)-2,4-dioxo-1,3-oxazolidin, 3-[3,5-Dichlorphenyl(-5-methyl-5-methoxymethyl]-1,3-oxazolidin2,4-dion, 3-(3,5-Dichlorphenyl)-1-isopropylcarba-moylhydantoin, N-(3,5-Dichlorphenyl)-1,2-dimethylcyclopropan-1,2-dicarbonsäureimid, 2-Cyano-(N-(ethylaminocarbonyl)-2-meth-oximino]-acetamid, 1-[2-(2,4-Dichlorphenyl)-pentyl]-1H-1,2,4-triazol, 2,4-Difluor-α-(1H-1,2,4-triazolyl-1-methyl)-benzhydryl-alkohol, N-(3-Chlor-2,6-dinitro-4-trifluormethyl-phenyl)-5-tri-fluormethyl-3-chlor-2-aminopyridin, 1-((bis-(4-Fluorphenyl)-methylsilyl)-methyl)-1H-1,2,4-triazol.

Brauchbare Wachstumsregulatoren sind z.B. die Gruppe der Gibberelline. Dazu gehören z.B. die Gibberelline GA₁, GA₃, GA₄, GA₅ und GA₇ etc. und die entsprechenden exo-16,17-Dihydrogibberelline sowie die Derivate davon, z.B. die Ester mit C₁-C₄-Carbonsäuren. Erfindungsgemäß bevorzugt ist das exo-16, 17-Dihydro-GA₅-13-acetat.

Gemäß einer Ausführungsform besteht die Wirkstoffkomponente (a) im wesentlichen aus einem oder mehreren der folgenden bevorzugten Wirkstoffe: Bentazon, Difenzoquat, Pendimethalin, Quinclorac, Cycloxydim, Quinmerac, Sethoxydim, Cinidon-ethyl, Mecoprop, Mecoprop-P, Dichlorprop, Chloridazon, Dicamba, Metobromuron, Profoxydim, Tritosulfuron, Diflufenzopyr, s-Dimethenamid, Cyanazine, Picolinafen, Cyclosulfamuron, Imazamethabenz-methyl, Imazaquin, Acifluorfen, Nicosulfuron, Sulfur, Dithianon, Tridemorph, Metiram, Nitrothal-Isopropyl, Thiophhanate-Methyl, Metholachlor, Triforine, Cerbendazim, Vinclozolin, Dodine, Fenpropimorph, Epoxiconazole, Kresoxim-methyl, Pyraclostrobin, Dimoxystrobin, Cyazofamid, Fenoxalin, Dimethomorph, Metconazole, Dimethoate, Chlorfenvinphos, Phorate, Fenbutatin oxide, Chrorfenapyr, Simazine, Bensulforon, Flufenoxuron, Terflubenzuron, Alphacypermetrin, Cypermethrin, Hydramehylnon, Terbufos, Temephos, Halofenozide, Flocoumafen, Triazamate, Flucythrinate, Hexythiazox, Dazomet, Chlorocholinchlorid, Mepiguatchlorid, Prohexadion-Ca, bzw. aus einem oder mehreren der folgenden ganz bevorzugten Wirkstoffe: Metazachlor, Paraquat, Glyphosat, Imazethaphyr, Tepraloxydim, Imazapic, Imazamox, Acetochlor, Atrazine, Tebufenpyrad, Trifluralin, Pyridaben.

Beschrieben sind insbesondere Mittel mit hohen Wirkstoffanteilen (Konzentrate). So macht der Anteil der Komponente (a) am Gesamtgewicht des Mittels in der Regel mehr als 10 Gew.-%, vorzugsweise mehr als 15 Gew.-% und insbesondere mehr als 20 Ges.-% aus. Andererseits liegt der Anteil der Komponente (a) am Gesamtgewicht des Mittels zweckmäßigerweise in der Regel bei weniger als 80 Gew.-%, vorzugsweise bei weniger als 70 Gew.-% und insbesondere bei weniger als 60 Gew.-%.

Die Formulierungen können im übrigen übliche Hilfs- und/oder Zusatzstoffe für die Herstellung von Formulierungen im agrotechnischen Bereich und insbesondere auf dem Gebiet des Pflanzenschutzes enthalten. Dazu gehören beispielsweise Tenside, Dispergierhilfsmittel, Netzmittel, Verdickungsmittel, organische Lösungsmittel, Cosolventien, Entschäumer, Carbonsäuren, Konservierungsmittel, Stabilisierungsmittel, etc.

Gemäß einer besonderen Ausführungsform umfassen die Mittel als oberflächenaktive Komponente (c) wenigstens ein (weiteres) Tensid. Der Begriff "Tensid" bezeichnet hier grenzflächenaktive bzw. oberflächenaktive Mittel.

Die Komponente (c) wird insbesondere als Dispergator bzw. Emulgator, vor allem zum Dispergieren eines Feststoffanteils in Suspensionskonzentraten, zugesetzt. Ferner können Teile der Komponente (c) als Netzmittel dienen.

Prinzipiell brauchbar sind anionische, kationische, amphotere und nichtionische Tenside, wobei Polymer-Tenside sowie Tenside mit Heteroatomen in der hydrophoben Gruppe eingeschlossen sind.

Zu den anionischen Tensiden gehören beispielsweise Carboxylate, insbesondere Alkali-, Erdalkali- und Ammoniumsalze von Fettsäuren, z.B. Kaliumstearat, die üblicherweise auch als Seifen bezeichnet werden; Acylglutamate; Sarkosinate, z.B. Natriumlauroylsarkosinat; Taurate; Methylcellulosen; Alkylphosphate, insbesondere Mono- und Diphosphorsäurealkylester; Sulfate, insbesondere Alkylsulfate und Alkylethersulfate; Sulfonate, weitere Alkyl- und Alkylarylsulfonate, insbesondere Alkali-, Erdalkali- und Ammoniumsalze von Arylsulfonsäuren sowie alkylsubstituierten Arylsulfonsäuren, Alkylbenzolsulfonsäuren, wie beispielsweise Lignin- und Phenolsulfonsäure, Naphthalin- und Dibutylnaphthalinsulfonsäuren, oder Dodecylbenzolsulfonate, Alkylnaphthalinsulfonate, Alkylmethylestersulfonate, Kondensationsprodukte von sulfoniertem Naphthalin und Derivaten davon mit Formaldehyd, Kondensationsprodukte von Naphthalinsulfonsäuren, Phenol- und/oder Phenolsulfonsäuren mit Formaldehyd oder mit Formaldehyl und Harnstoff, Mono- oder Dialkyl-bernsteinsäureestersulfonate; sowie Eiweißhydrolysate und Lignin-Sulfitablaugen. Die zuvor genannten Sulfonsäuren werden vorteilhafterweise in Form ihrer neutralen oder gegebenenfalls basischen Salze verwendet.

Zu den kationischen Tensiden gehören beispielsweise quaternierte Ammoniumverbindungen, insbesondere Alkyltrimethylammonium- und Dialkyldimethylammonium-Halogenide und -alkylsulfate sowie Pyridin- und Imidazolin-Derivate, insbesondere Alkylpyridinium-Halogenide.

Zu den nichtionischen Tensiden gehören beispielsweise weitere Alkoxylate und vor allem Ethoxylate sowie nichtionische Tenside, insbesondere
- Fettalkohol-polyoxyethylen-ester, beispielsweise Laurylalkohol-polyoxyethylenetheracetat,
- Alkyl-Polyoxyethylen- und -polyoxypropylen-ether, z.B. von linearen Fettalkoholen, Alkylarylalkohol-Polyoxyethylenether, z.B. Octylphenol-Polyoxyethylenether,
- alkoxylierte tierische und/oder pflanzliche Fette und/oder Öle, beispielsweise Maisölethoxylate, Rizinusölethoxylate, Talgfettethoxylate,
- Glycerinester, wie beispielsweise Glycerinmonostearat,
- Fettalkoholalkoxylate und Oxoalkoholalkoxylate, insbesondere vom linearen Typ R₅O-(R₃O)ᵣ(R₄O)ₛR₂₀ mit R₃ und R₄ unabhängig voneinander = C₂H₄, C₃H₆, C₄H₈ und R₂₀ = H, oder C₁-C₁₂-Alkyl, R₅ = C₃-C₃₀-Alkyl oder C₆-C₃₀-Alkenyl, r und s unabhängig voneinander 0 bis 50, wobei nicht beide für 0 stehen können, Oleylalkohol-polyoxyethylenether,
- Alkylphenolalkoxylate, wie beispielsweise ethoxyliertes isoOctyl-, Octyl- oder Nonyl-phenol, Tributylphenol-polyoxyethylenether,
- Fettaminalkoxylate, Fettsäureamid- und Fettsäurediethanolamidalkoxylate, insbesondere deren Ethoxylate,
- Zuckertenside, Sorbitester, wie beispielsweise Sorbitanfettsäureester (Sorbitanmonooleat, Sorbitantristearat), Polyoxyethylensorbitanfettsäureester, Alkylpolyglycoside, N-Alkylgluconamide,
- Alkylmethylsulfoxide,
- Alkyldimethylphosphinoxide, wie beispielsweise Tetradecyldimethylphosphinoxid.

Zu den amphoteren Tensiden gehören beispielsweise Sulfobetaine, Carboxybetaine und Alkyldimethylaminoxide, z.B. Tetradecyldimethylaminoxid.

Zu den polymeren Tensiden gehören beispielsweise Di-, Tri- und Multiblockpolymere vom Typ (AB)ₓ, ABA und BAB, z.B. gegebenenfalls Endgruppen-verschlossene Ethylenoxid/Propylenoxid-Blockcopolymere, z.B. Ethylendiamin-EO/PO-Blockcopolymere, Polystyrol-Block-Polyethylenoxid, und AB-Kammpolymere, z.B. Polymethacrylat-comb-Polyethylenoxid.

Weitere Tenside, die hier beispielhaft genannt werden sollen, sind Perfluortenside, Silikontenside, z.B. Polyether-modifizierte Siloxane, Phospholipide, wie beispielsweise Lecithin oder chemisch modifizierte Lecithine, Aminosäuretenside, z.B. N-Lauroylglutamat und oberflächenaktive Homo- und Copolymere, z.B. Polyvinylpyrrolidon, Polyacrylsäuren in Form ihrer Salze, Polyvinylalkohol, Polypropylenoxid, Polyethylenoxid, Maleinsäureanhydrid-Isobuten-Copolymere und Vinylpyrrolidon-Vinylacetat-Copolymere. Sofern nicht spezifiziert, handelt es sich bei den Alkylketten der oben aufgeführten Tenside um lineare oder verzweigte Reste mit üblicherweise 8 bis 20 Kohlenstoffatomen.

Vorzugsweise ist das weitere Tensid im Rahmen der Komponente (c) ausgewählt unter nichtionischen Tensiden. Hiervon sind insbesondere diejenigen bevorzugt, die HLB-Werte im Bereich von 2 bis 16, vorzugsweise im Bereich von 5 bis 16, und insbesondere im Bereich von 8 bis 16 besitzen.

Der Anteil der Komponente (c) am Gesamtgewicht des Mittels be-trägt - sofern vorhanden - in der Regel weniger als 50 Gew.-%, vorzugsweise weniger als 15 Gew.-% und insbesondere weniger als 5 Gew.-%.

Gemäß einer besonderen Ausführungsform umfassen die Mittel als Komponente (d) mindestens einen weiteren Hilfsstoff.

Die Komponente (d) kann vielerlei Zwecke erfüllen. Die Wahl geeigneter Hilfsstoffe erfolgt den Anforderungen entsprechend in üblicher Weise durch den Fachmann.

Beispielsweise sind weitere Hilfsstoffe ausgewählt unter
(d1) Lösungs- oder Verdünnungsmitteln;
(d2) Emulgatoren, Retentionsmitteln, pH-Puffern, Anti-Schaumstoffen.

Neben Wasser können die Mittel weitere Lösungsmittel löslicher Bestandteile bzw. Verdünnungsmittel unlöslicher Bestandteile des Mittels umfasssen.

Prinzipiell brauchbar sind beispielsweise Mineralöle, synthetische Öle sowie pflanzliche und tierische Öle, sowie niedermolekulare hydrophile Lösungsmittel wie Alkohle, Ether, Ketone und ähnliches.

Einerseits sind daher aprotische bzw. apolare Lösungs- bzw. Verdünnungsmittel zu nennen, wie Mineralölfraktionen von mittlerem bis hohem Siedepunkt, z.B. Kerosin und Dieselöl, ferner Kohlenteeröle, Kohlenwasserstoffe, Paraffinöle, z.B. C₈- bis C₃₀-Kohlenwasserstoffe der n- oder iso-Alkan-Reihe oder Gemische davon, gegebenenfalls hydrierte oder teilhydrierte Aromaten oder Alkylaromaten aus der Benzol- oder Naphthalin-Reihe, z.B. aromatische oder cycloaliphatische C₇- bis C₁₈-Kohlenwasserstoffverbindungen, aliphatische oder aromatische Carbonsäure- oder Dicarbonsäureester, Fette oder Öle pflanzlichen oder tierischen Ursprungs, wie Mono-, Di- und Triglyceride, in Reinform oder als Gemisch beispielsweise in Form öliger Naturstoffextrakte, z.B. Olivenöl, Sojaöl, Sonnenblumenöl, Castoröl, Sesamöl, Maisöl, Erdnussöl, Rapsöl, Leinsamenöl, Mandelöl, Rhizinusöl, Safloröl, sowie deren Raffinate, z.B. hydrierte oder teilhydrierte Produkte davon und/ oder deren Ester, insbesondere Methyl- und Ethylester.

Beispiele für C₈- bis C₃₀-Kohlenwasserstoffe der n- oder iso-Alkan-Reihe sind n- und iso-Octan, -Decan, -Hexadecan, -Octadecan, -Eicosan, und vorzugsweise Kohlenwasserstoffgemische, wie Paraffinöl (das in technischer Qualität bis zu etwa 5% Aromaten enthalten kann) und ein C₁₈-C₂₄-Gemisch, das unter der Bezeichnung Spraytex-Ö1 im Handel von der Fa. Texaco erhältlich ist.

Zu den aromatischen oder cycloaliphatischen C₇- bis C₁₈-Kohlenwasserstoffverbindungen gehören insbesondere aromatische oder cycloaliphatische Lösungsmittel aus der Alkyl-Aromatenreihe. Diese Verbindungen können unhydriert, teilhydriert oder vollständig hydriert sein. Zu derartigen Lösungsmitteln gehören insbesondere Mono-, Di- oder Trialkylbenzole, Mono-, Di-, Trialkyl-substituierte Tetraline und/oder Mono-, Di-, Tri- oder Tetraalkyl-substituierte Naphthaline (Alkyl steht vorzugsweise für C₁-C₆-Alkyl). Beispiele derartiger Lösungsmittel sind Toluol, o-, m-, p-Xylol, Ethylbenzol, Isopropylbenzol, tert.-Butylbenzol und Gemische, wie die unter der Bezeichnung Shellsol und Solvesso vertriebenen Produkte der Fa. Exxon, z.B. Solvesso 100, 150 und 200.

Beispiele für geeignete Monocarbonsäureester sind Ölsäureester, insbesondere Methyloleat und Ethyloleat, Laurinsäureester, insbesondere 2-Ethylhexyllaurat, Octyllaurat und Isopropyllaurat, Isopropylmyristat, Palmitinsäureester, insbesondere 2-Ethylhexylpalmitat und Isopropylpalmitat, Stearinsäureester, insbesondere Stearinsäure-n-butylester und 2-Ethylhexansäure-2-ethylhexylester.

Beispiele für geeignete Dicarbonsäureester sind Adipinsäureester, insbesondere Dimethyladipat, Di-n-butyladipat, Di-n-octyladipat, Di-iso-octyladipat, auch als Bis-(2-ethylhexyl)adipat bezeichnet, Di-n-nonyladidipat, Di-iso-nonyladidipat und Ditridecyladipat; Bernsteinsäureester, insbesondere Di-n-octylsuccinat und Di-isooctylsuccinat, und Di-(iso-nonyl)cyclohexan-1,2-dicarboxylat.

Der Anteil der zuvor beschriebenen aprotischen Lösungs- bzw. Verdünnungsmitteln am Gesamtgewicht des Mittels beträgt in der Regel weniger als 80 Gew.-%, vorzugsweise weniger als 50 Gew.-% und insbesondere weniger als 30 Gew.-%.

Einige dieser aprotischen Lösungs- bzw Verdünnungsmittel können ebenfalls adjuvante, d.h. insbesondere wirkungsfördernde Eigenschaften, haben. Dies gilt insbesondere für besagte Mono- und Dicarbonsäureester. Unter diesem Aspekt können derartige Adjuvantien auch als Teil einer weiteren Formulierung (stand alone-Produkt) mit den erfindungsgemäßen Alkoholalkoxylaten bzw. diese enthaltenden Mitteln zu einem zweckmäßigen Zeitpunkt, in der Regel kurz vor der Applikation, vermischt werden.

Andererseits sind protische bzw. polare Lösungs- bzw. Verdünnungsmittel zu nennen, z.B. C₂-C₈-Monoalkohole wie Ethanol, Propanol, Isopropanol, Butanol, Isobutanol, tert-Butanol, Cyclohexanol und 2-Ethylhexanol, C₃-C₈-Ketone wie Diethylketon, t-Butylmethylketon und Cyclohexanon, sowie aprotische Amine, wie N-Methyl- und N-Octylpyrrolidon.

Der Anteil der zuvor beschriebenen protischen bzw. polaren Lösungs- bzw. Verdünnungsmitteln am Gesamtgewicht des Mittels beträgt in der Regel weniger als 80 Gew.-%, vorzugsweise weniger als 50 Gew.-% und insbesondere weniger als 30 Gew.-%.

Auch Antiabsetzmittel können insbesondere für Suspensionskonzentrate verwendet werden. Diese dienen vor allem zur rheologischen Stabilisierung. Insbesondere sind in diesem Zusammenhang mineralische Produkte, z.B. Bentonite, Talcite und Herktorite, zu nennen.

Weitere gegebenenfalls brauchbare Zusätze sind z.B. unter Mineralsalzlösungen, welche zur Behebung von Ernährungs- und Spurenelementmängeln eingesetzt werden, nichtphytotoxischen Ölen und Ölkonzentraten, Antidriftreagenzien, Antischaummitteln, insbesondere solchen vom Silicon-Typ, beispielsweise das von der Firma wacker vertriebene Silicon SL, und ähnlichem zu finden.

Die Formulierungen können als emulgierbares Konzentrat (EC), Suspoemulsion (SE), Öl-in-Wasser-Emulsion (O/W), Wasser-in-Öl-Emulsion (W/O), wässriges Suspensionskonzentrat, Ö1-Suspensionskonzentrat (SC), Mikroemulsion (ME), etc. vorliegen.

Die Herstellung der Mittel kann in an sich bekannter Weise erfolgen. Dazu werden zumindest Teile der Komponenten zusammengegeben.

Hierbei ist zu beachten, daß Produkte, insbesondere handelsübliche Produkte, verwendet werden können, deren Bestandteile zu unterschiedlichen Komponenten beitragen können. Beispielsweise kann ein bestimmtes Tensid in einem aprotischen Lösungmittel gelöst sein, so daß dieses Produkt zu verschiedenen Komponenten beitragen kann. Ferner können unter Umständen auch geringe Anteile an weniger erwünschten Substanzen mit handelsüblichen Produkten eingebracht werden. Als Gemisch sind die zusammengegebenen Produkte dann in der Regel intensiv miteinander zu einem homogenen Gemisch zu vermengen und erforderlichenfalls - z.B. im Falle von Suspensionen, zu vermahlen.

Das Vermengen kann in an sich bekannter Weise erfolgen, z.B. durch Homogenisieren mit geeigneten Vorrichtungen wie KPG- oder Magnetrührern.

Auch das Vermahlen ist ein an sich bekannter Vorgang. Als Mahlkörper kann man Glasmahlkörper oder andere mineralische oder metallische Mahlkörper, in der Regel in einer Größe von 0,1-30 mm und insbesondere von 0,6-2 mm verwenden. Man zerkleinert das Gemisch in der Regel solange, bis die gewünschte Partikelgröße erreicht ist.

Allgemein kann die Vermahlung in Kreisfahrweise, d.h. laufendes Umpumpen beispielsweise eines SCs im Kreis, oder mittels Passagenfahrweise, d.h. komplettes und wiederholtes Durchpumpen beziehungsweise Durchfahren eines Ansatzes, durchgeführt werden.

Die Vermahlung kann mit herkömmlichen Kugel-, Perl- oder Rührwerksmühlen erfolgen, z.B. in einer Dynomühle (Fa. Bachofen), mit Ansatzgrößen von beispielsweise 0,5 bis zu 1 Liter in sogenannter Passagenfahrweise. Nach mehreren - insbesondere 4 bis 6 - Passagen (Durchpumpen der Aufschlämmung durch die Mühle mit Hilfe einer Schlauchpumpe) werden dabei nach mikroskopischer Auswertung mittlere Partikelgrößen von 0,5 bis 10 µm erreicht.

Die Mittel werden vor Gebrauch in der Regel durch Verdünnen in üblicher Weise in eine zur Anwendung brauchbare Form überführt. Bevorzugt ist das Verdünnen mit Wasser oder auch aprotischen Lösungsmitteln, beispielsweise im Tankmixverfahren. Die Verwendung in Form einer Spritzbrühen-Zubereitung ist bevorzugt. Appliziert werden kann im Vorauflauf- oder Nachauflaufverfahren. Besondere Vorteile ergeben sich im Nachauflaufverfahren.

Die erfindungsgemäße Verwendung umfasst auch den Einsatz der erfindungsgemäßen Alkoxylate als "stand-alone"-Produkt. Dazu werden die Alkoxylate in geeigneter Weise hergerichtet, um kurz vor der Anwendung dem zu applizierenden Mittel zugesetzt zu werden.

Vor allem bei der Sprühbehandlung ergeben sich besondere Vorteile. Für eine übliche Tankmix-Spritzbrühe werden die bereits wenigstens einen alkoxylierten verzweigten Alkohol enthaltenden Mittel - oder weitere Pflanzenbehandlungsmittel unter Zusatz wenigstens eines alkoxylierten verzweigten Alkohols als "standalone"-Produkt - so mit Wasser verdünnt, dass pro ha etwa 0,01 bis 10, vorzugsweise etwa 0,05 bis 5 und insbesondere 0,1 bis 1 kg wenigstens eines Alkoxylats appliziert werden.

Im Rahmen der vorliegenden Beschreibung umfasst der Begriff Alkyl geradkettige oder verzweigte Kohlenwasserstoffgruppen, wie Methyl, Ethyl, n-Propyl, i-Propyl, n-Butyl, i-Butyl, sek-Butyl, t-Butyl, n-Pentyl, n-Hexyl, n-Octyl, 2-Ethylhexyl, n-Nonyl, iso-Nonyl, n-Decyl, iso-Decyl, n-Undecyl, iso-Undecyl, n-Dodecyl, iso-Dodecyl, n-Tridecyl, iso-Tridecyl, Stearyl, n-Eicosyl, vorzugsweise mit - soweit nichts anderes angegeben ist - 1 bis 8, insbesondere 1 bis 6 und besonders bevorzugt 1 bis 4 Kohlenstoffatomen für kurzkettige Reste und 5 bis 30, insbesondere 12 bis 24 und besonders bevorzugt 8 bis 20 Kohlenstoffatomen für langkettige Reste. Zu den verzweigten langkettigen Resten gehören vor allem 2-Ethylhexyl, iso-Nonyl, iso-Decyl wie 2-Propylheptyl, iso-Undecyl, iso-Dodecyl, und iso-Tridecyl wie 2,4,6,8-Tetramethyl-1-nonyl, 3,4,6,8-Tetramethyl-1-nonyl und 5-Ethyl-4,7-dimethyl-1nonyl.

Im Rahmen der vorliegenden Beschreibung sind Mengenangaben im Allgemeinen auf das Gesamtgewicht eines Mittels zu beziehen, sofern nicht anderes angeben ist. Der Ausdruck "im Wesentlichen" bezeichnet erfindungsgemäß in der Regel ein prozentuales Verhältnis von wenigstens 80 %, vorzugsweise von wenigstens 90 % und insbesondere von wenigstens 95 %.

Die Erfindung wird durch die nachfolgenden Beispiele näher erläutert :

### Herstellungsbeispiele

### Referenzbeispiele 1 bis 5:

### Herstellung der Alkoxylate (a) bis (e)

### Referenzbeispiel 1: 2-Propylheptanol + 7 EO (a)

In einem Autoklaven wurden 711 g 2-Propylheptanol (entsprechend 4,5 mol) zusammen mit 2,0 g Kaliumhydroxid als Alkoxylierungskatalysator vorgelegt. Nach einer Entwässerungsphase wurden bei 150 °C kontinuierlich 1386 g Ethylenoxid (entsrechend 31,5 mol) eingegast. Zur Vervollständigung der Umsetzung wurde 1 h bei derselben Temperatur nachgerührt. Man erhielt 2080 g des oben genannten Produktes (a).

### Referenzbeispiel 2: i-Tridecanol (Basis Trimerbuten) + 6 EO + 3 PO (b)

In einem Autoklaven wurden 700 g i-Tridecanol (entsprechend 3,5 mol) zusammen mit 4,0 g Kaliumhydroxid als Alkoxylierungskatalysator vorgelegt. Nach einer Entwässerungsphase wurden bei 110 bis 120 °C kontinuierlich 924 g Ethylenoxid (entsprechend 21,0 mol) eingegast. Zur Vervollständigung der Umsetzung wurde 1 h bei derselben Temperatur nachgerührt. Dann wurde die Temperatur auf 150 °C erhöht, und es wurden kontinuierlich 609 g Propylenoxid (entsprechend 10,5 mol) in den Reaktor gegeben. Bei Erreichen der Druckkonstanz wurde die Temperatur zur Vervollständigung des Umsatzes zwei Stunden gehalten. Man erhielt 2210 g des oben genannten Produktes (b).

### Referenzbeispiel 3: i-Decanol + 10 EO + 1,5 Pentenoxid (c) (zur erfindungsgemäßen Verwendung)

In einem Autoklaven wurden 474 g i-Decanol (entsprechend 3,0 mol) zusammen mit 4,5 g Kaliumhydroxid als Alkoxylierungskatalysator vorgelegt. Nach einer Entwässerungsphase wurden bei 10 bis 120 °C kontinuierlich 1320 g Ethylenoxid (entsprechend 30,0 mol) eingegast. Zur Vervollständigung der Umsetzung wurde 1 h bei derselben Temperatur nachgerührt. Dann wurde die Temperatur auf 160 °C erhöht, und es wurden kontinuierlich 387 g Pentenoxid (entsprechend 4,5 mol) in den Reaktor gegeben. Bei Erreichen der Druckkonstanz wurde die Temperatur zur Vervollständigung des Umsatzes zwei Stunden gehalten. Man erhielt 2180 g des oben genannten Produktes (c).

### Referenzbeispiel 4: i-Decanol + 3 EO (d)

In einem Autoklaven wurden 1106 g i-Decanol (entsprechend 7,0 mol) zusammen mit 1,0 g Kaliumhydroxid als Alkoxylierungskatalysator vorgelegt. Nach einer Entwässerungsphase wurden bei 150 °C kontinuierlich 924 g Ethylenoxid (entsprechend 21,0 mol) eingegast. Zur Vervollständigung der Umsetzung wurde 1 h bei derselben Temperatur nachgerührt. Man erhielt 2010 g des oben genannten Produktes (d).

### Referenzbeispiel 5: i-Tridecanol (Basis Trimerbuten) + 3 EO (e)

In einem Autoklaven wurden 1200 g i-Tridecanol (entsprechend 6,0 mol) zusammen mit 2,0 g Kaliumhydroxid als Alkoxylierungskatalysator vorgelegt. Nach einer Entwässerungsphase wurden bei 150 °C kontinuierlich 792 g Ethylenoxid (entsprechend 18,0 mol) eingegast. Zur Vervollständigung der Umsetzung wurde 1 h bei derselben Temperatur nachgerührt. Man erhielt 1970 g des oben genannten Produktes (e).

### Beispiel 1: Herbizide Wirksamkeit der Bentazon-Formulierungen

Die Applikation der Alkoxylate erfolgte im Tankmixverfahren zusammen mit Basagran (480 g/l Bentazon)oder BAS 635 H (71,4 Gew.-% Tritosulfuron). Die Aufwandmenge pro ha betrug 0,250 kg Bentazon oder 8 g/ha Tritosulfuron sowie 0,125 kg a.S./ha erfindungsgemä-Bes Alkoxylat bzw. 0,250 kg /ha Vergleichsadjuvans Atplus 411F (Mineralöl/Tensid-Gemisch; Uniqema). Die herbizide Wirkung wurde im Gewächshausversuch beurteilt. Als Testpflanze diente Weißer Gänsefuß (Chenepodium album; CHEAL) und die Purpurtrichterwinde (Pharbitis album; PHAAL).

Die Pflanzen wurden direkt gesät oder pikiert mit 3-15 Pflanzen pro Topf. Die Höhe der Planzen bei der Wirkstoffapplikation betrug 5-16 cm. Als Versuchsgefäße dienten Plastiktöpfe mit lehmigem Sand und etwa 3 % Humus als Substrat. Die Applikation der Tenside erfolgte im Tankmixverfahren durch Spritzapplikation im Nachauflaufverfahren in einer automatischen Spritzkabine mit einer Wasseraufwandmenge von 400 Liter pro Hektar. Die Versuchsdauer betrug 6 Tage bis 4 Wochen. Die Bewertung erfolgte nach einer Skala von 0 % bis 100 %. Dabei bedeutet 0 % keine Schädigung, 100 % eine vollständige Schädigung.

In den folgenden Tabellen 1 und 2 sind die Bewertungsergebnisse zusammengestellt.

**Tabelle 1**

| Adjuvans | Bentazon (kg/ha) | Adjuvans (kg/ha) | CHEAL |
|---|---|---|---|
| - | 0,250 | - | 23 % |
| a * | 0,250 | 0,125 | 92 % |
| b * | 0,250 | 0,125 | 93 % |
| c | 0,250 | 0,125 | 92 % |
| d * | 0,250 | 0,125 | 92 % |
| e * | 0,250 | 0,125 | 96 % |
| Vergleich | 0,250 | 0,250 | 50 % |
| * Referenzbeispiel | | | |

**Tabelle 2**

| Adjuvans | Tritosulfuron (kg/ha) | Adjuvans (kg/ha) | CHEAL | PHAAL |
|---|---|---|---|---|
| - | 0,250 | - | 35 % | 48 % |
| a * | 0,250 | 0,125 | 90 % | 65 % |
| b * | 0,250 | 0,125 | 92 % | 65 % |
| c | 0,250 | 0,125 | 90 % | 68 % |
| d * | 0,250 | 0,125 | 92 % | 65 % |
| e * | 0,250 | 0,125 | 90 % | 73 % |
| Vergleich | 0,250 | 0,250 | 90 % | 62 % |
| * Referenzbeispiel | | | | |

Es ist klar ersichtlich, dass Formulierungen mit erfindungsgemäßem Alkoxylat wesentlich wirksamer sind als die Vergleichsformulierung ohne Adjuvans, bzw. als die Vergleichsformulierung, die lediglich Atplus 411 F, anstatt erfindungsgemäßer Alkoxylate enthalten.

## Patentansprüche

1. Verwendung wenigstens eines alkoxylierten C10-Oxoalkohols der Formel (I)
R-O-(CₘH₂ₘO)ₓ-(CₙH₂ₙO)_{y}-H (I)
worin
R für Isodecyl steht;
m, n unabhängig voneinander für einen Wert von 2 bis 16 stehen;
x+y einem Wert von 1 bis 100 entsprechen,
und wobei:
m = 2 ist, n = 3 ist, der Wert von x größer als null ist, und der Wert von y größer als null ist; oder
m = 3 ist, n = 2 ist, der Wert von x größer als null ist, und der Wert von y größer als null ist; oder
m = 2 ist, n = 5 ist, der Wert von x größer als null ist, und der Wert von y größer als null ist; oder
m = 5 ist, n = 2 ist, der Wert von x größer als null ist, und der Wert von y größer als null ist,
als Adjuvans bei der Behandlung von Pflanzen.

2. Verwendung nach Anspruch 1, wobei m = 2 ist, n = 3 ist, x einen Wert von 4 bis 10 hat, y einen Wert von 2 bis 5 hat, das Verhältnis von x zu y 1,5 : 1 bis 3 : 1 beträgt, und die Summe aus x und y einen Wert von 6 bis 15 hat.

3. Verwendung nach Anspruch 1, wobei m = 3 ist, n = 2 ist, x einen Wert von 1 bis 4 hat, y einen Wert von 4 bis 10 hat, das Verhältnis von x zu y 1,5 : 1 bis 1 : 6 beträgt, und die Summe aus x und y einen Wert von 5 bis 14 hat.

4. Verwendung nach Anspruch 1, wobei m = 2 ist, n = 5 ist, x einen Wert von 6 bis 15 hat, y einen Wert von 0,5 bis 2 hat, das Verhältnis von x zu y 4 : 1 bis 15 : 1 beträgt, und die Summe aus x und y einen Wert von 6,5 bis 17 hat.

5. Verwendung nach Anspruch 1, wobei m = 5 ist, n = 2 ist, x einen Wert von 0,5 bis 2 hat, y einen Wert von 5 bis 15 hat, das Verhältnis von x zu y 1 : 25 bis 1 : 5 beträgt, und die Summe aus x und y einen Wert von 5,5 bis 17 hat.

6. Verwendung nach einem der Ansprüche 1 bis 5, wobei der Alkohol ein C10-Oxoalkohol mit einem mittleren Verzweigungsgrad im Bereich von 1 bis 4 ist.

7. Verwendung nach Anspruch 6, wobei der C10-Oxoalkohol durch Hydrierung von hydroformyliertem Trimerpropen erhältlich ist.

8. Verwendung nach einem der Ansprüche 1 bis 7, zur Verbesserung der Wirksamkeit eines Pflanzenschutzwirkstoffs.

9. Verwendung nach Anspruch 8, wobei die Wirksamkeit des Wirkstoffs durch eine stärkere Aufnahme des Wirkstoffs durch die Pflanze verbessert wird.

10. Verwendung nach Anspruch 9, wobei die Aufnahme des Wirkstoffs über das Blatt erfolgt.

11. Verwendung nach einem der Ansprüche 1 bis 10 im Nachauflaufverfahren.

12. Verwendung nach einem der Ansprüche 1 bis 11 als Tankzusatz bei der Sprühbehandlung von Pflanzen.

## Claims

1. The use of at least one alkoxylated C10-oxoalcohol of the formula (I)
R-O-(CₘH₂ₘO)ₓ-(CₙH₂ₙO)_{y}-H (I)
in which
R is isodecyl;
m, n independently of one another is a value of from 2 to 16;
x+y have a value of from 1 to 100,
and wherein:
m = 2, n = 3, the value of x is greater than zero and the value of y is greater than zero; or
m = 3, n = 2, the value of x is greater than zero and the value of y is greater than zero; or
m = 2, n = 5, the value of x is greater than zero and the value of y is greater than zero; or
m = 5, n = 2, the value of x is greater than zero and the value of y is greater than zero,
as adjuvant in the treatment of plants.

2. The use according to claim 1, wherein m = 2, n = 3, x has a value of from 4 to 10, y has a value of from 2 to 5, the ratio of x to y is 1.5:1 to 3:1 and the total of x and y has a value of from 6 to 15.

3. The use according to claim 1, wherein m = 3, n = 2, x has a value of from 1 to 4, y has a value of from 4 to 10, the ratio of x to y is 1.5:1 to 1:6 and the total of x and y has a value of from 5 to 14.

4. The use according to claim 1, wherein m = 2, n = 5, x has a value of from 6 to 15, y has a value of from 0.5 to 2, the ratio of x to y is 4:1 to 15:1 and the total of x and y has a value of from 6.5 to 17.

5. The use according to claim 1, wherein m = 5, n = 2, x has a value of from 0.5 to 2, y has a value of from 5 to 15, the ratio of x to y is from 1:25 to 1:5 and the total of x and y has a value of from 5.5 to 17.

6. The use according to any of claims 1 to 5, wherein the alcohol is a C10-oxoalcohol with a mean degree of branching in the range of from 1 to 4.

7. The use according to claim 6, wherein the C10-oxo-alcohol is obtainable by hydrogenating hydroformylated propene trimer.

8. The use according to any of claims 1 to 7 for improving the activity of a plant protection active substance.

9. The use according to claim 8, wherein the activity of the active substance is improved by an enhanced uptake of the active substance by the plant.

10. The use according to claim 9, wherein the uptake of the active substance is via the leaf.

11. The use according to any of claims 1 to 10 postemergence.

12. The use according to any of claims 1 to 11 as tank additive in the spray treatment of plants.

## Revendications

1. Utilisation d'au moins un oxoalcool alcoxylé en en C10 de formule (I)
R-O-(CₘH₂ₘO)ₓ-(CₙH₂ₙO)_{y}-H (I)
dans laquelle
R représente isodécyle ;
m, n représentent, indépendamment l'un de l'autre, une valeur de 2 à 16 ; x+y correspond à une valeur de 1 à 100,
et dans laquelle
m = 2, n = 3, la valeur de x est supérieure à zéro et la valeur de y est supérieure à zéro ; ou
m = 3, n = 2, la valeur de x est supérieure à zéro et la valeur de y est supérieure à zéro ; ou
m = 2, n = 5, la valeur de x est supérieure à zéro et la valeur de y est supérieure à zéro ; ou
m = 5, n = 2, la valeur de x est supérieure à zéro et la valeur de y est supérieure à zéro ;
comme adjuvant lors du traitement de plantes.

2. Utilisation selon la revendication 1, m = 2, n = 3, x correspondant à une valeur de 4 à 10, y correspondant à une valeur de 2 à 5, le rapport de x à y valant 1,5:1 à 3:1, et la somme de x et y correspondant à une valeur de 6 à 15.

3. Utilisation selon la revendication 1, m = 3, n = 2, x correspondant à une valeur de 1 à 4, y correspondant à une valeur de 4 à 10, le rapport de x à y valant 1,5:1 à 1:6, et la somme de x et y correspondant à une valeur de 5 à 14.

4. Utilisation selon la revendication 1, m = 2, n = 5, x correspondant à une valeur de 6 à 15, y correspondant à une valeur de 0,5 à 2, le rapport de x à y valant 4:1 à 15:1, et la somme de x et y correspondant à une valeur de 6,5 à 17.

5. Utilisation selon la revendication 1, m = 5, n = 2, x correspondant à une valeur de 0,5 à 2, y correspondant à une valeur de 5 à 15, le rapport de x à y valant 1:25 à 1:5, et la somme de x et y correspondant à une valeur de 5,5 à 17.

6. Utilisation selon l'une quelconque des revendications 1 à 5, l'alcool étant un oxoalcool en C10 présentant un degré de ramification moyen dans la plage de 1 à 4.

7. Utilisation selon la revendication 6, l'oxoalcool en C10 pouvant être obtenu par hydrogénation de propène trimère hydroformylé.

8. Utilisation selon l'une quelconque des revendications 1 à 7, pour améliorer l'activité d'une substance active de protection des plantes.

9. Utilisation selon la revendication 8, l'activité de la substance active étant améliorée par une absorption plus forte de la substance active par la plante.

10. Utilisation selon la revendication 9, l'absorption de la substance active ayant lieu via la feuille.

11. Utilisation selon l'une quelconque des revendications 1 à 10 dans le procédé de postémergence.

12. Utilisation selon l'une quelconque des revendications 1 à 11 comme additif de cuve lors du traitement par pulvérisation de plantes.
